(19) Europäisches Patentamt / European Patent Office / Office européen des brevets

(11) **EP 4 502 426 A1**

(12) **EUROPEAN PATENT APPLICATION**
published in accordance with Art. 153(4) EPC

(43) Date of publication:
**05.02.2025 Bulletin 2025/06**

(21) Application number: **23807240.9**

(22) Date of filing: **21.02.2023**

(51) International Patent Classification (IPC):
**F16H 49/00** (2006.01)   **H02K 49/10** (2006.01)
**H02K 7/10** (2006.01)

(52) Cooperative Patent Classification (CPC):
**F16H 49/00; H02K 7/10; H02K 49/10**

(86) International application number:
**PCT/JP2023/006185**

(87) International publication number:
**WO 2023/223622 (23.11.2023 Gazette 2023/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.05.2022 JP 2022081212**

(71) Applicant: **Mitsubishi Heavy Industries, Ltd.
Tokyo 100-8332 (JP)**

(72) Inventors:
• **HIROE, Takaharu**
**Tokyo 100-8332 (JP)**
• **WAKASA, Tsuyoshi**
**Tokyo 100-8332 (JP)**
• **ARINAGA, Shinji**
**Tokyo 100-8332 (JP)**

(74) Representative: **Studio Torta S.p.A.
Via Viotti, 9
10121 Torino (IT)**

(54) **MAGNETIC GEAR AND MAGNETIC-GEARED ELECTRIC MACHINE**

(57) This magnetic gear comprises a plurality of first magnets that are arranged in a circumferential direction, a plurality of second magnets that are arranged in the circumferential direction, and a plurality of pole pieces that are arranged in the circumferential direction. The pole pieces each have a first facing surface that faces a first magnet, and a second facing surface that faces a second magnet. In a case where the length of the first facing surface in the circumferential direction is denoted as L1, and the length of the second facing surface in the circumferential direction is denoted as L2, at least one of the plurality of pole pieces satisfies the relation L1>L2.

FIG. 3A

EP 4 502 426 A1

## Description

Technical Field

The present disclosure relates to a magnetic gear and a magnetic geared electrical machine.
Priority is claimed on Japanese Patent Application No. 2022-081212, filed May 18, 2022, the content of which is incorporated herein by reference.

Background Art

The magnetic geared electrical machine includes a magnetic gear unit for transmitting a magnetic torque. The magnetic gear unit exemplified in PTL 1 includes an outer rotor, a magnetic pole piece module, and an inner rotor in order from the outside in the radial direction. The outer rotor includes a plurality of outer magnets arranged in the circumferential direction, and the inner rotor includes a plurality of inner magnets arranged in the circumferential direction. The plurality of outer magnets and the plurality of inner magnets are permanent magnets.

Citation List

Patent Literature

[PTL 1] Japanese Patent No. 6202354

Summary of Invention

Technical Problem

The amount of change (gradient) in the rotational direction of the magnetomotive force caused by the permanent magnet contributes to the transmission torque of the magnetic gear unit. In the magnetic gear unit, it is preferable that at least one of the outer rotor and the inner rotor is provided with a tooth portion that protrudes toward the magnetic pole piece and supports the magnet. This is because, in this case, the transmission torque further includes a magnetic reluctance torque for bringing the tooth portion and the magnetic pole piece closer to each other in the rotational direction. In such a configuration, it is desired to further improve the transmission torque.
The present disclosure provides a magnetic gear and a magnetic geared electrical machine having a tooth portion protruding toward a magnetic pole piece and supporting magnets to improve transmission torque.

Solution to Problem

A magnetic gear according to at least one embodiment of the present disclosure includes

a first yoke unit including a plurality of first magnets arranged in a circumferential direction and a first yoke supporting the plurality of first magnets,
a second yoke unit disposed on an outer circumferential side or an inner circumferential side of the first yoke unit and including a plurality of second magnets arranged in the circumferential direction and a second yoke supporting the plurality of second magnets, and
a magnetic pole piece unit including a plurality of magnetic pole pieces arranged in the circumferential direction between the first yoke unit and the second yoke unit so as to face each of the plurality of first magnets and the plurality of second magnets with a gap therebetween,
in which the first yoke includes a first main body portion having an inner circumferential surface or an outer circumferential surface supporting the plurality of first magnets,
the second yoke includes a second main body portion having an outer circumferential surface or an inner circumferential surface facing the plurality of second magnets, and at least one second tooth portion protruding in a radial direction from the outer circumferential surface or the inner circumferential surface of the second main body portion toward the magnetic pole piece and supporting the second magnet,
each of the magnetic pole pieces has

a first opposing surface facing the first magnet, and
a second opposing surface facing the second magnet, and

in a case where a length of the first opposing surface in the circumferential direction is denoted as L1, and a length of the second opposing surface in the circumferential direction is denoted as L2,
at least one of the plurality of magnetic pole pieces satisfies a relationship of L1 > L2.

A magnetic gear according to at least one embodiment of the present disclosure includes

a first yoke unit including a plurality of first magnets arranged in a circumferential direction and a first yoke supporting the plurality of first magnets,
a second yoke unit disposed on an outer circumferential side or an inner circumferential side of the first yoke unit and including a plurality of second magnets arranged in the circumferential direction and having a length shorter than a length of the first magnet in the circumferential direction, and a second yoke supporting the plurality of second magnets, and
a magnetic pole piece unit including a plurality of magnetic pole pieces arranged in the circumferential direction between the first yoke unit and the second yoke unit so as to face each of the plurality of first magnets and the plurality of second magnets with a gap therebetween,
in which the second yoke includes a second main body portion having an outer circumferential surface or an inner circumferential surface facing the plurality of second magnets, and at least one second tooth portion protruding in a radial direction from the outer circumferential surface or the inner circumferential surface of the second main body portion toward the magnetic pole piece and supporting the second magnet,
each of the magnetic pole pieces has a second opposing surface facing the second magnet,
the second opposing surface includes

a third end that is an end on one side in the circumferential direction, and
a fourth end that is an end on the other side in the circumferential direction,

the at least one of the plurality of magnetic pole pieces includes

a main body portion,
a third flange portion that protrudes from the main body portion to the one side in the circumferential direction and that has the third end of the second opposing surface, and
a fourth flange portion that protrudes from the main body portion to the other side in the circumferential direction and that has the fourth end of the second opposing surface, and

in a case where a length of the second opposing surface in the circumferential direction is denoted as L2, an average length of the magnetic pole pieces in the circumferential direction is denoted as L3, and a length of the second magnet in the circumferential direction is denoted as N,
at least one of the plurality of magnetic pole pieces satisfies a relationship of $0.9 \times \min \{L2, L3\} \leq N \leq 1.1 \times \max \{L2, L3\}$.

A magnetic gear according to at least one embodiment of the present disclosure includes

a first yoke unit including a plurality of first magnets arranged in a circumferential direction and a first yoke supporting the plurality of first magnets,
a second yoke unit disposed on an outer circumferential side or an inner circumferential side of the first yoke unit and including a plurality of second magnets arranged in the circumferential direction and a second yoke supporting the plurality of second magnets, and
a magnetic pole piece unit including a plurality of magnetic pole pieces arranged in the circumferential direction between the first yoke unit and the second yoke unit so as to face each of the plurality of first magnets and the plurality of second magnets with a gap therebetween,
in which the second yoke includes a second main body portion having an outer circumferential surface or an inner circumferential surface facing the plurality of second magnets, and a plurality of second tooth portions arranged in the circumferential direction and protruding in a radial direction from the outer circumferential surface or the inner circumferential surface of the second main body portion toward the magnetic pole piece and supporting the second magnets,
each of the magnetic pole pieces has a second opposing surface facing the second magnet, and
in a case where a length of the second opposing surface in the circumferential direction is denoted as L2, an average length of the magnetic pole pieces in the circumferential direction is denoted as L3, and an adjacent distance between two of the second tooth portions adjacent to each other in the circumferential direction included in the plurality of second tooth portions is denoted as M,
at least one of the plurality of magnetic pole pieces satisfies a relationship of $0.9 \times \min\{L2, L3\} \le M \le 1.1 \times \max\{L2, L3\}$.

A magnetic geared electrical machine according to one embodiment of the present disclosure includes:

the magnetic gear according to any one of the above aspects; and
a coil wound around the second tooth portion or the magnetic pole piece. Advantageous Effects of Invention

According to the present disclosure, it is possible to provide a magnetic gear and a magnetic geared electrical machine having a tooth portion protruding toward a magnetic pole piece and supporting a magnet to improve transmission torque.

Brief Description of Drawings

Fig. 1A is a schematic diagram of a magnetic gear (magnetic geared generator) according to an embodiment.
Fig. 1B is a schematic diagram of a magnetic gear (magnetic geared generator) according to another embodiment.
Fig. 2A is a schematic diagram showing a first internal structure of the magnetic gear according to the embodiment.
Fig. 2B is a schematic diagram showing a second internal structure of the magnetic gear according to the embodiment;
Fig. 2C is a schematic diagram showing a third internal structure of the magnetic gear according to the embodiment.
Fig. 2D is a schematic diagram showing a fourth internal structure of the magnetic gear according to the embodiment.
Fig. 3A is a first conceptual diagram of a magnetic pole piece according to a first example;
Fig. 3B is a second conceptual diagram of the magnetic pole piece according to the first example.
Fig. 3C is a third conceptual diagram of the magnetic pole piece according to the first example;
Fig. 3D is a fourth conceptual diagram of the magnetic pole piece according to the first example.
Fig. 4A is a conceptual perspective view of a magnetic pole piece according to the embodiment;
Fig. 4B is a conceptual diagram of a first electromagnetic steel plate according to the embodiment.
Fig. 4C is a conceptual diagram of a second electromagnetic steel plate according to the embodiment;
Fig. 4D is a schematic diagram of a magnetic pole piece according to the first example;
Fig. 5A is a first conceptual diagram of a magnetic pole piece according to a second example;
Fig. 5B is a second conceptual diagram of the magnetic pole piece according to the second example.
Fig. 5C is a third conceptual diagram of the magnetic pole piece according to the second example;
Fig. 5D is a schematic diagram of a magnetic pole piece according to the second example;
Fig. 6 is a conceptual diagram of a magnetic pole piece according to a third example.
Fig. 7A is a schematic diagram showing a third internal structure according to the embodiment.
Fig. 7B is a schematic diagram showing a third internal structure according to another embodiment.
Fig. 8 is a conceptual diagram showing an electromagnetic force and permeance in the first internal structure according to the embodiment.
Fig. 9 is a conceptual graph showing various parameters corresponding to circumferential positions of a plurality of magnetic pole pieces having different circumferential lengths;
Figs. 10A and 10B are schematic diagrams showing a third internal structure according to the embodiment.
Fig. 11A is a schematic diagram of a magnetic geared electrical machine (magnetic geared generator) according to the embodiment;
Fig. 11B is a schematic diagram of a magnetic geared electrical machine (magnetic geared generator) according to another embodiment.
Fig. 11C is a schematic diagram of a magnetic geared electrical machine (magnetic geared motor) according to an embodiment.
Fig. 11D is a schematic diagram of a magnetic geared electrical machine (magnetic geared motor) according to another embodiment.

Description of Embodiments

Hereinafter, some embodiments of the present disclosure will be described with reference to the accompanying drawings. However, dimensions, materials, shapes, and relative dispositions of components described as the embodiments or illustrated in the drawings are not intended to limit the scope of the present disclosure, and are merely examples for describing the present disclosure.

<1. Outline of Magnetic Gear 5>

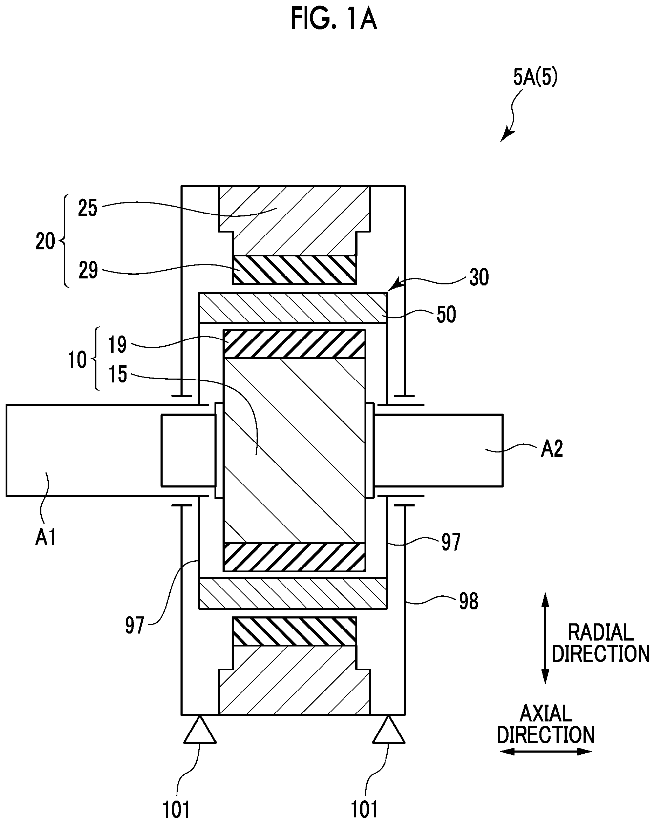

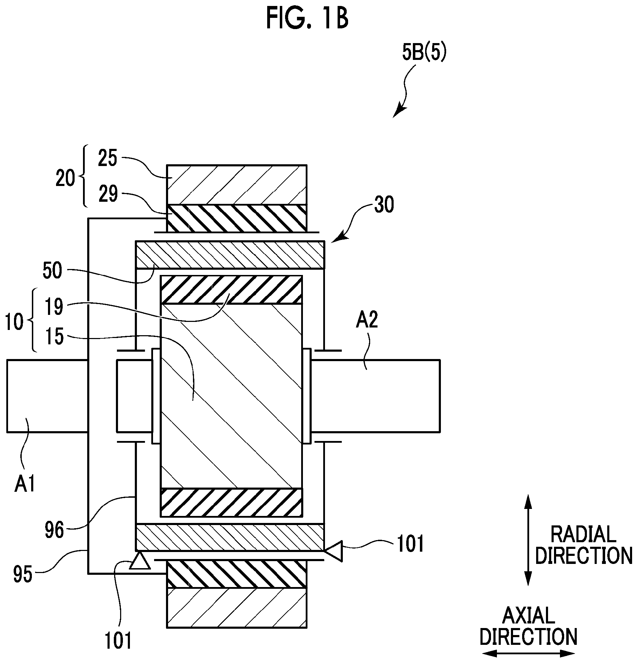

Figs. 1A and 1B are schematic diagrams of a magnetic gear 5 according to some embodiments of the present disclosure. In the following description, an "axial direction" is a direction parallel to a rotation axis (the first rotation axis A1 or the second rotation axis A2) of the magnetic gear 5, a "radial direction" is a direction orthogonal to the rotation axis of the magnetic gear 5, and a "circumferential direction" is a circumferential direction based on the rotation axis of the magnetic gear 5. In the following description, the circumferential length of a component of the magnetic gear 5 may be simply referred to as the circumferential length of the component.

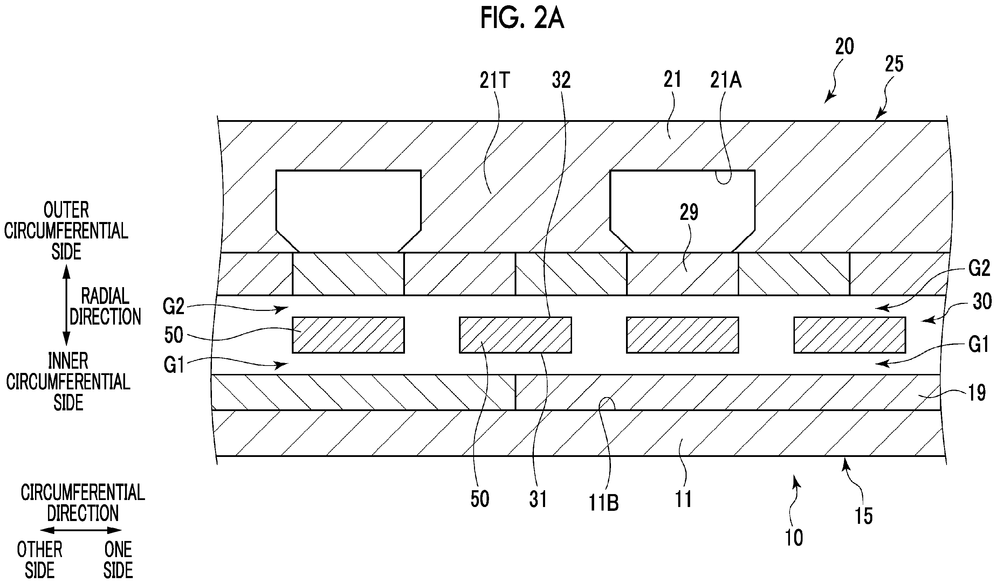

Each of the magnetic gears 5 shown in Figs. 1A and 1B includes a first yoke unit 10, a second yoke unit 20, and a magnetic pole piece unit 30 in order from one side in the radial direction. These three units all extend in the axial direction. The first yoke unit 10 includes a plurality of first magnets 19 arranged in the circumferential direction and a first yoke 15 supporting the plurality of first magnets 19. The second yoke unit 20 includes a plurality of second magnets 29 arranged in the circumferential direction and a second yoke 25 supporting the plurality of second magnets 29. The magnetic pole piece unit 30 includes a plurality of magnetic pole pieces 50 arranged in the circumferential direction, and the plurality of magnetic pole pieces 50 face each of the plurality of first magnets 19 and the plurality of second magnets 29 between the first yoke unit 10 and the second yoke unit 20 with gaps G1 and G2 (see Fig. 2A, for example) therebetween. One of the first yoke unit 10, the second yoke unit 20, and the magnetic pole piece unit 30 functions as a stator, and the remaining two function as rotors. The number of the second magnets 29 is larger than the number of the magnetic pole pieces 50, and the number of the magnetic pole pieces 50 is larger than the number of the first magnets 19. The circumferential length of the first magnet 19 is longer than the circumferential length of the second magnet 29.

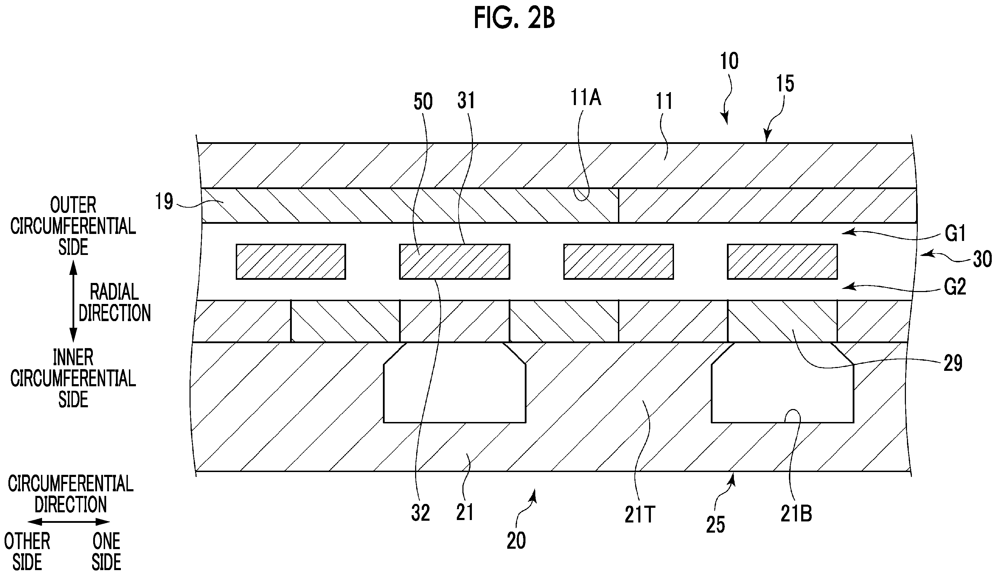

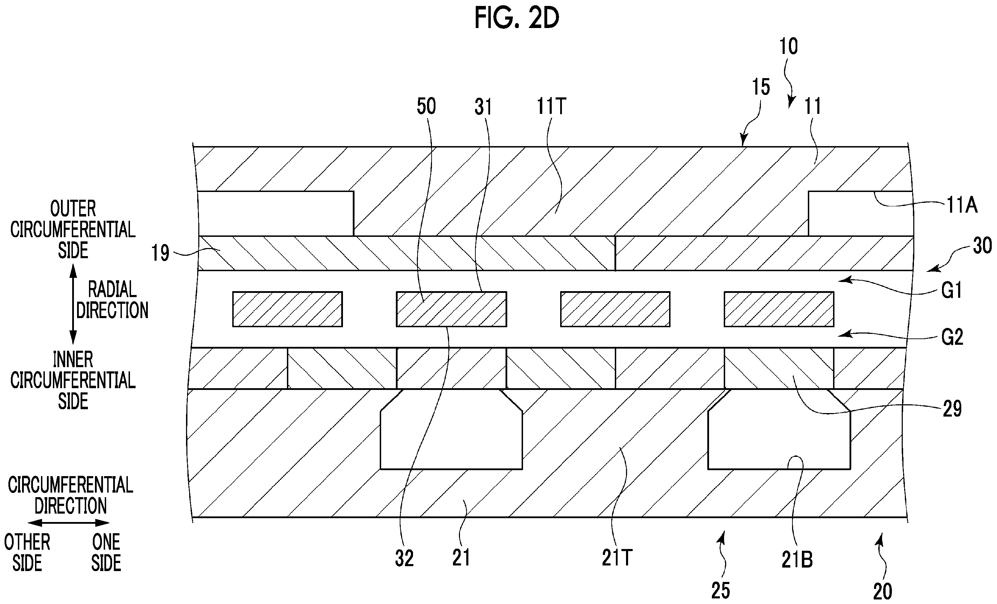

In the example of Figs. 1A and 1B, the second yoke unit 20 is disposed on the outer circumferential side of the first yoke unit 10. That is, the magnetic gear 5 includes the first yoke unit 10, the magnetic pole piece unit 30, and the second yoke unit 20 in order from the inner side (inner circumferential side) in the radial direction. In another example, the second yoke unit 20 may be disposed on the inner circumferential side of the first yoke unit 10, that is, the magnetic gear 5 may include the first yoke unit 10, the magnetic pole piece unit 30, and the second yoke unit 20 in order from the outer side (outer circumferential side) in the radial direction (see Figs. 2B and 2D).

<1-1. Magnetic Gear 5A (5) According to an Embodiment>

The magnetic gear 5A (5) shown in Fig. 1A includes a housing 98 which may be mounted on a base 101. In the example in the same drawing, the second yoke unit 20 functions as a stator. The housing 98 rotatably supports the first rotation axis A1, which may function as an input shaft, via a bearing. Both axial ends of the magnetic pole piece unit 30 are coupled to the pair of end plates 97, respectively. One of the end plates 97 is coupled to the first rotation axis A1, and the other end plate 97 is coupled via a bearing to the second rotation axis A2 disposed coaxially with the first rotation axis A1. Therefore, the magnetic pole piece unit 30 shown in the same drawing functions as a rotor that rotates together with the first rotation axis A1. The second rotation axis A2 of the present example, which may function as an output shaft, supports the first yoke unit 10 disposed between the pair of end plates 97. Therefore, the first yoke unit 10 shown in the same drawing functions as a rotor that rotates together with the second rotation axis A2. The second rotation axis A2 is rotatably supported by the housing 98 via a bearing. One end portion of the second rotation axis A2 may be coupled to the first rotation axis A1 via a bearing or may not be coupled to the first rotation axis A1.

The magnetic gear 5A operates as follows, for example. When the first rotation axis A1 as the input shaft rotates together with the magnetic pole piece unit 30, the plurality of magnetic pole pieces 50 rotate relative to the plurality of first magnets 19 and the plurality of second magnets 29. As a result, the magnetic flux flowing through the magnetic pole piece unit 30 between the first yoke unit 10 and the second yoke unit 20 changes, and the first yoke unit 10 rotates in a direction in which the magnitude of the magnetic flux of the first magnet 19 increases. Accordingly, the second rotation axis A2 as the output shaft rotates.

In the magnetic gear 5A, the second rotation axis A2 may function as an input shaft, and the first rotation axis A1 may function as an output shaft. Even in this case, when the first yoke unit 10 rotates together with the second rotation axis A2, the plurality of magnetic pole pieces 50 rotate relative to the plurality of first magnets 19. As a result, the magnetic flux flowing through the magnetic pole piece unit 30 between the first yoke unit 10 and the second yoke unit 20 changes, and the magnetic pole piece unit 30 rotates in a direction in which the magnitude of the magnetic flux flowing through the magnetic pole piece unit 30 increases. Accordingly, the first rotation axis A1 as the output shaft rotates.

In the magnetic gear 5A described above, the ratio of the number of revolutions of the first yoke unit 10 to the magnetic pole piece unit 30 is represented by the ratio of the number of magnetic poles NL of the magnetic pole piece 50 to the number of pole pairs NH of the first magnet 19 (= NL/NH). In the present example, NL/NH is greater than 1, the first yoke unit 10 functions as a high-speed rotor, and the magnetic pole piece unit 30 functions as a low-speed rotor. The number NL of magnetic poles of the magnetic pole piece 50 is smaller than the number NS of magnetic poles of the second magnet 29.

<1-2. Magnetic Gear 5B (5) According to Another Embodiment>

In a magnetic gear 5B (5) according to another embodiment shown in Fig. 1B, the magnetic pole piece unit 30 functions as a stator, and the first yoke unit 10 and the second yoke unit 20 function as a rotor. The magnetic gear 5B includes a housing 96 which may be mounted on the base 101 and by which the magnetic pole piece unit 30 is supported. The housing 96 rotatably supports a second rotation axis A2 that may function as an output shaft via a bearing. The first rotation axis A1, which is disposed coaxially with the second rotation axis A2 and may function as an input shaft, is rotatably supported by a support unit (not shown) and is coupled to the second yoke unit 20 via a coupling member 95. The second yoke unit 20 may be coupled to the magnetic pole piece unit 30 via a bearing. The second rotation axis A2 may be coupled to the first rotation axis A1 via a bearing, or may not be coupled to the first rotation axis A1.

The magnetic gear 5B operates as follows, for example. When the first rotation axis A1 as the input shaft rotates together with the second yoke unit 20, the plurality of magnetic pole pieces 50 rotate relative to the plurality of second magnets 29. As a result, the magnetic flux flowing through the magnetic pole piece unit 30 between the first yoke unit 10 and the second yoke unit 20 changes, and the first yoke unit 10 rotates in a direction in which the magnitude of the magnetic flux flowing through the first magnet 19 increases. Accordingly, the second rotation axis A2 as the output shaft rotates.

In the magnetic gear 5B described above, the second rotation axis A2 may function as an input shaft, and the first rotation axis A1 may function as an output shaft. Even in this case, when the first yoke unit 10 rotates together with the second rotation axis A2, the plurality of magnetic pole pieces 50 rotate relative to the plurality of first magnets 19. As a result, the magnetic flux flowing through the magnetic pole piece unit 30 between the first yoke unit 10 and the second yoke unit 20 changes, and the second yoke unit 20 rotates in a direction in which the magnitude of the magnetic flux flowing through the second magnet 29 increases. Accordingly, the first rotation axis A1 as the output shaft rotates.

<1-3. Supplement of Magnetic Gear 5>

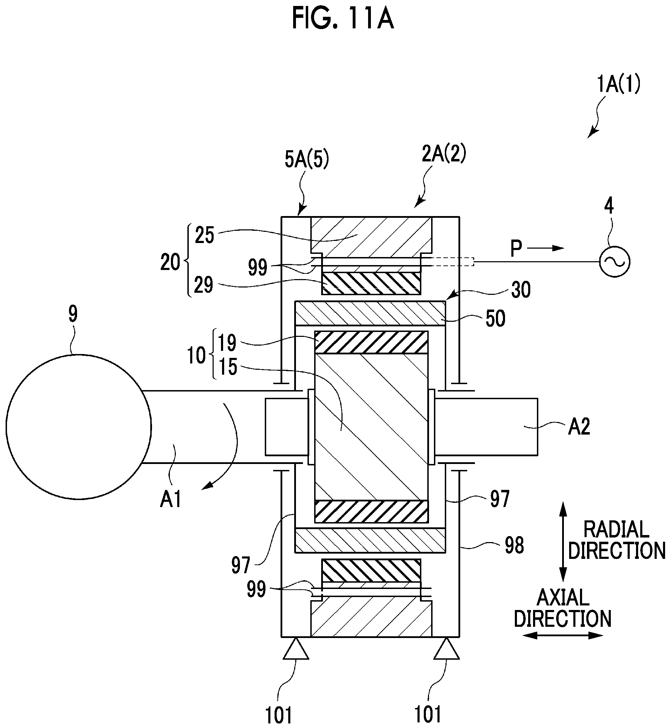

The magnetic gear 5 shown in Fig. 1A and Fig. 1B can also be incorporated into a magnetic geared electrical machine 1 described below, which may be, for example, a magnetic geared generator 2 or a magnetic geared motor 3 (see Figs. 11A to 11D). In a case where the magnetic geared electrical machine 1 is a magnetic geared generator 2, the first rotation axis A1 or the second rotation axis A2 functioning as an output shaft may not be provided. In a case where the magnetic geared electrical machine 1 is the magnetic geared motor 3, the first rotation axis A1 or the second rotation axis A2 functioning as the input shaft may not be provided. Furthermore, even in a case where the magnetic geared electrical machine 1 is any of a magnetic geared generator 2 or a magnetic geared motor 3, the first rotation axis A1 and the second rotation axis A2 may be provided with a single rotation axis. Although not shown in detail, in the magnetic gear 5 according to the present embodiment, one rotation axis may be rotatably supported by the housing 98 (see Fig. 1A) and may be rotatably coupled to the first yoke unit 10, and each of the pair of end plates 97 may be fixed to the outer peripheral portion of the rotating axis. In this case, the first yoke unit 10 and the magnetic pole piece unit 30 function as a rotor, and the second yoke unit 20 functions as a stator.

<2. Example of Internal Structure of Magnetic Gear 5>

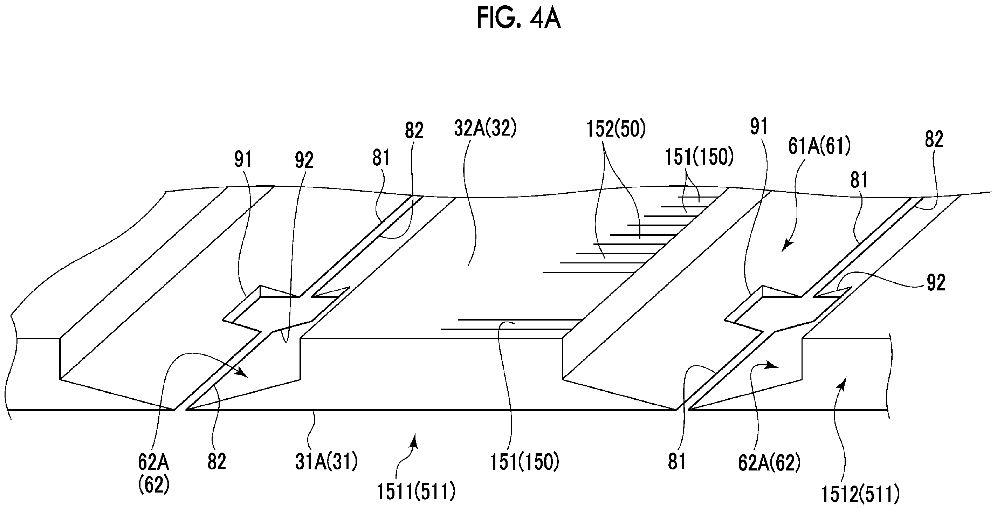

Fig. 2A to Fig. 2D are schematic diagrams showing an internal structure of the magnetic gear 5 according to some embodiments of the present disclosure. In Fig. 2A to Fig. 2D as schematic diagrams, the circumferential direction is shown linearly. Each magnetic pole piece 50 extending in the axial direction faces any one or more of the plurality of first magnets 19 with a gap G1 therebetween, and faces any one or more of the plurality of second magnets 29 with a gap G2 therebetween. The plurality of first magnets 19 are configured by magnets (N-pole magnets and S-pole magnets) having different magnetic poles alternately arranged in the circumferential direction. Similarly, the plurality of second magnets 29 are configured by magnets (N-pole magnets and S-pole magnets) having different magnetic poles alternately arranged in the circumferential direction. In each of the magnetic pole pieces 50, a surface facing the first magnet 19 is a first opposing surface 31, and a surface facing the second magnet 29 is a second opposing surface 32. As an example, the magnetic pole piece 50 has a structure in which a plurality of electromagnetic steel plates 150 (see Fig. 4A) are stacked in the axial direction. At least one of the outer circumferential surface and the inner circumferential surface of the magnetic pole piece 50 may be covered with a cover (not shown). In this case, the first opposing surface 31 may face the first magnet 19 with the gap G1 and the cover therebetween, and the second opposing surface 32 may face the second magnet 29 with the gap G2 and the cover therebetween.

The magnetic pole piece unit 30 includes a holder (not shown) for holding the plurality of magnetic pole pieces 50. As an example, the holder made of a nonmagnetic material may be a single ring-shaped member, or may include a plurality of bar-shaped members arranged alternately with the plurality of magnetic pole pieces 50 in the circumferential direction. Both axial ends of the magnetic pole piece unit 30 formed in a ring shape by the plurality of magnetic pole pieces 50 and the holders may be coupled respectively to the pair of end plates 97 described above (see Fig. 1A), or may be fixed to the housing 96 described above (see Fig. 1B).

As shown in Fig. 2A to Fig. 2D, the first yoke unit 10 is disposed on one of the outer circumferential side or the inner circumferential side of the magnetic pole piece unit 30, and the second yoke unit 20 is disposed on the other side. At least one of the first yoke unit 10 or the second yoke unit 20 is provided with a tooth portion protruding toward the magnetic pole piece unit 30, and the tooth portion supports the magnet (the first magnet 19 or the second magnet 29). These variations on the internal structure of the magnetic gear 5 include a first internal structure, a second internal structure, a third internal structure, a fourth internal structure, a fifth internal structure, and a sixth internal structure.

<2-1. First Internal Structure>

In the first internal structure shown in Fig. 2A, the first yoke unit 10 is disposed on the inner circumferential side of the magnetic pole piece unit 30, and the second yoke unit 20 is disposed on the outer circumferential side. Further, the first yoke unit 10 is not provided with tooth portion, and the second yoke unit 20 is provided with tooth portion. A more detailed structure is as follows.

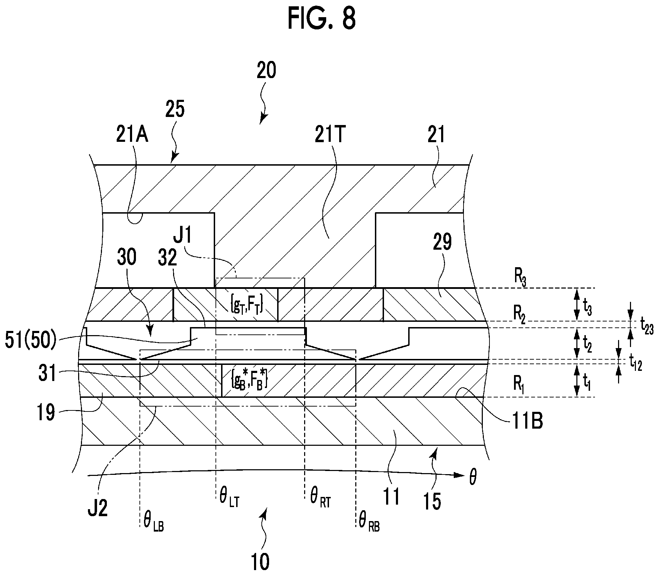

The first yoke 15 includes a first main body portion 11, which may be a core formed of a soft magnetic material. The first main body portion 11 shown in Fig. 2A has an outer circumferential surface 11B that supports the plurality of first magnets 19 arranged in the circumferential direction. The outer circumferential surface 11B is a curved surface formed over the entire circumferential length of the magnetic gear 5. The second yoke 25 includes a second main body portion 21, which may be a core formed of a soft magnetic material, and at least one second tooth portion 21T. In the example of Fig. 2A, the second main body portion 21 has an inner circumferential surface 21A facing the plurality of second magnets 29, and the second tooth portion 21T protrudes from the inner circumferential surface 21A toward the magnetic pole piece 50 and supports one or more second magnets 29. The second tooth portion 21T is formed of a soft magnetic material, and may be formed integrally with the second main body portion 21. In addition, as shown in the same drawing, the second tooth portion 21T may have a tip portion configured such that the circumferential length becomes longer as approaching the magnetic pole piece 50. In another example, the second tooth portion 21T may have the same circumferential length regardless of the radial position (see Fig. 8).

<2-2. Second Internal Structure>

In the second internal structure shown in Fig. 2B, the second yoke unit 20 is disposed on the inner circumferential side of the magnetic pole piece unit 30, and the first yoke unit 10 is disposed on the outer circumferential side. Similarly to the first internal structure, the first yoke unit 10 is not provided with tooth portion, and the second yoke unit 20 is provided with tooth portion. A more detailed structure is as follows.

The first yoke 15 includes a first main body portion 11, which may be a core formed of a soft magnetic material. The first main body portion 11 shown in Fig. 2B has an inner circumferential surface 11A that supports the plurality of first magnets 19 arranged in the circumferential direction. The inner circumferential surface 11A is a curved surface formed over the entire circumferential length of the magnetic gear 5. The second yoke 25 includes a second main body portion 21, which may be a core formed of a soft magnetic material, and at least one second tooth portion 21T. In the example of Fig. 2B, the second main body portion 21 has an outer circumferential surface 21B facing the plurality of second magnets 29, and the second tooth portion 21T protrudes from the outer circumferential surface 21B toward the magnetic pole piece 50 and supports one or more second magnets 29. Since the shape and material of the second tooth portion 21T are the same as those of the first internal structure, detailed description thereof is omitted.

<2-3. Third Internal Structure>

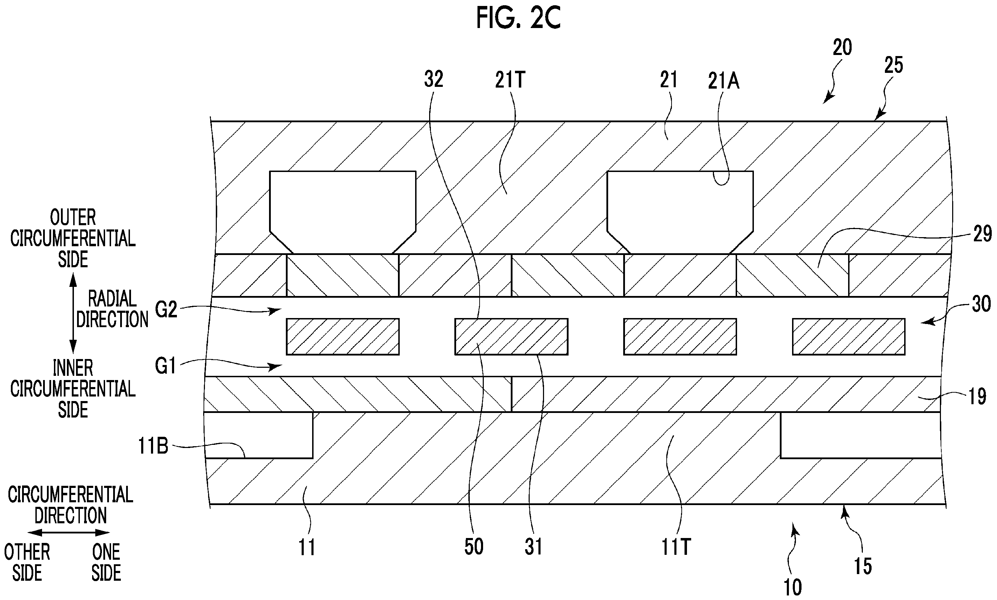

In the third internal structure shown in Fig. 2C, similarly to the first internal structure, the first yoke unit 10 is disposed on the inner circumferential side of the magnetic pole piece unit 30, and the second yoke unit 20 is disposed on the outer circumferential side. On the other hand, the third internal structure is different from the first internal structure in that tooth portions are provided in both the first yoke unit 10 and the second yoke unit 20. A more detailed structure is as follows.

The first yoke unit 10 shown in the example of Fig. 2C includes a first main body portion 11, which may be a core formed of a soft magnetic material, and at least one first tooth portion 11T. In the example of Fig. 2C, the first main body portion 11 has an outer circumferential surface 11B facing the plurality of first magnets 19, and the first tooth portion 11T protrudes from the outer circumferential surface 11B toward the magnetic pole piece 50 and supports the plurality of first magnets 19. The outer circumferential surface 11B is a curved surface formed over the entire circumferential length of the magnetic gear 5. The first tooth portion 11T is formed of a soft magnetic material, and may be formed integrally with the first main body portion 11. Since the second yoke unit 20 shown in the same drawing has the same configuration as the second yoke unit 20 of the first internal structure, detailed description thereof is omitted.

<2-4. Fourth Internal Structure>

In the fourth internal structure shown in Fig. 2D, similarly to the second internal structure, the second yoke unit 20 is disposed on the inner circumferential side of the magnetic pole piece unit 30, and the first yoke unit 10 is disposed on the outer circumferential side. On the other hand, the fourth internal structure is different from the second internal structure in that tooth portions are provided in both the first yoke unit 10 and the second yoke unit 20. A more detailed structure is as follows.

The first yoke unit 10 shown in the example of Fig. 2D includes a first main body portion 11, which may be a core formed of a soft magnetic material, and at least one first tooth portion 11T. In the example of Fig. 2D, the first main body portion 11 has an inner circumferential surface 11A facing the plurality of first magnets 19, and the first tooth portion 11T protrudes from the inner circumferential surface 11A toward the magnetic pole piece 50 and supports the plurality of first magnets 19. The inner circumferential surface 11A is a curved surface formed over the entire circumferential length of the magnetic gear 5. The first tooth portion 11T is formed of a soft magnetic material, and may be formed integrally with the first main body portion 11. Since the second yoke unit 20 shown in the same drawing has the same configuration as the second yoke unit 20 of the second internal structure, detailed description thereof is omitted.

<2-5. Fifth Internal Structure and Sixth Internal Structure>

The fifth internal structure has a structure in which the second yoke 25 in the third internal structure does not have the second tooth portion 21T. The sixth internal structure has a structure in which the second yoke 25 in the fourth internal structure does not have the second tooth portion 21T. That is, in the fifth internal structure and the sixth internal structure, a configuration in which the inner circumferential surface 21A or the outer circumferential surface 21B of the second main body portion 21 supports the second magnet 29 is employed. Detailed description of these internal structures is omitted.

<3. Details of Shape of Magnetic Pole Piece 50>

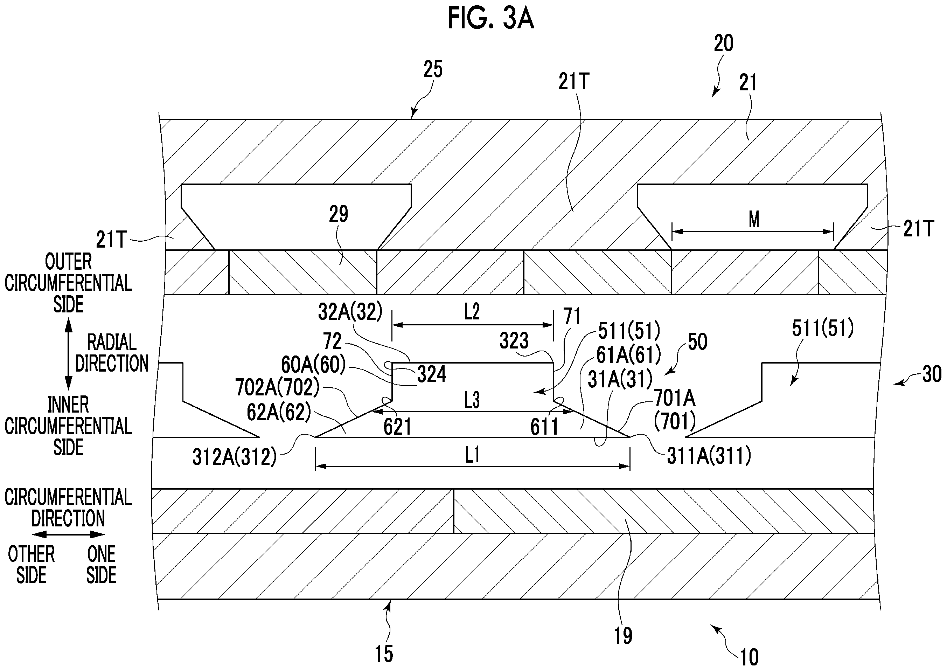

With reference to Figs. 3A to 6, specific examples of the magnetic pole piece 50 applied to the above-described internal structure will be described below in order as a magnetic pole piece 51 (50) according to a first example, a magnetic pole piece 52 (50) according to a second example, and a magnetic pole piece 53 (50) according to a third example.

<3-1. Magnetic Pole Piece 51 (50) According to First Example>

A magnetic pole piece 51 (50) according to a first example will be described with reference to Figs. 3A to 4C. The magnetic pole piece 51 is applied to an internal structure in which tooth portion are provided in only one of the first yoke unit 10 and the second yoke unit 20. That is, the internal structure to which the magnetic pole piece 51 can be applied includes a first internal structure, a second internal structure, a fifth internal structure, and a sixth internal structure. Hereinafter, an embodiment in which the magnetic pole piece 51 is applied to the first internal structure will be described, and description of embodiments in which the magnetic pole piece 51 is applied to other internal structures will be omitted.

Figs. 3A to 3D are conceptual diagrams of the magnetic pole piece 51 according to the first example. Each of the magnetic pole pieces 511 to 514 (51) shown in Figs. 3A to 3D has a first opposing surface 31A to 31D (31) facing the first magnet 19 and a second opposing surface 32A to 32D (32) facing the second magnet 29. In a case where the circumferential length of the first opposing surface 31 is denoted as L1 and the circumferential length of the second opposing surface 32 is denoted as L2, the magnetic pole pieces 511 to 514 (51) satisfy the relationship of L1 > L2. L2 shown in the same drawings is shorter than the circumferential length of the first magnet 19 and longer than the circumferential length of the second magnet 29. In another example, L2 may be shorter than the circumferential length of the second magnet 29.

According to the knowledge of the inventors, when the magnetic pole piece 51 (50) satisfying the relationship of L1 > L2 is adopted, the transmission torque is improved (for a specific reason will be described later in "<5. Regarding Magnetic Pole Piece 51 (50) satisfying Relationship of L1 > L2>"). Thus, according to the above configuration, a magnetic geared electrical machine 1 that has tooth portion protruding towards the magnetic pole pieces 51 and supporting the magnets and that has an improved transmission torque is achieved.

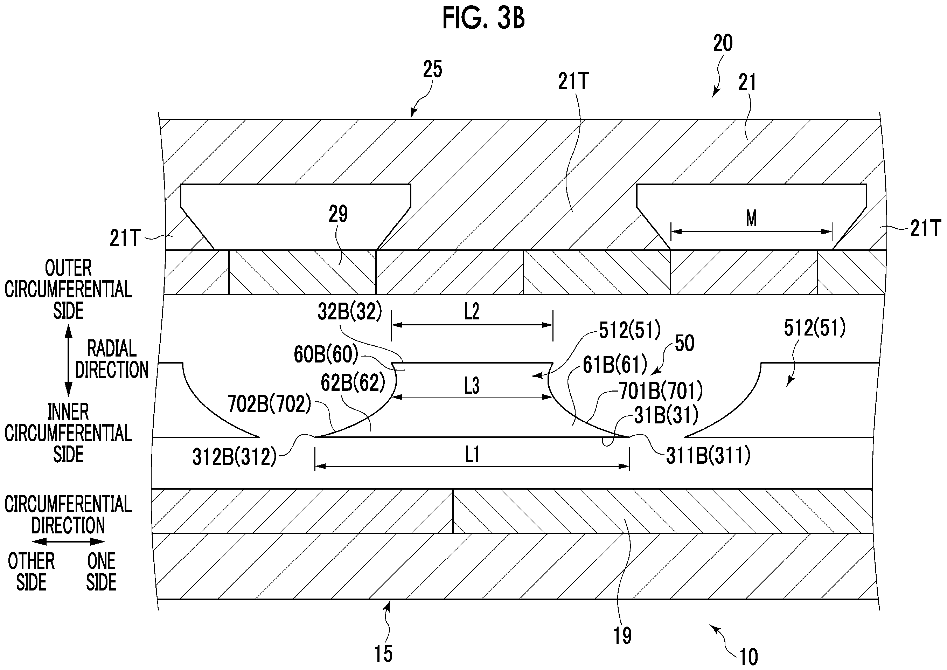

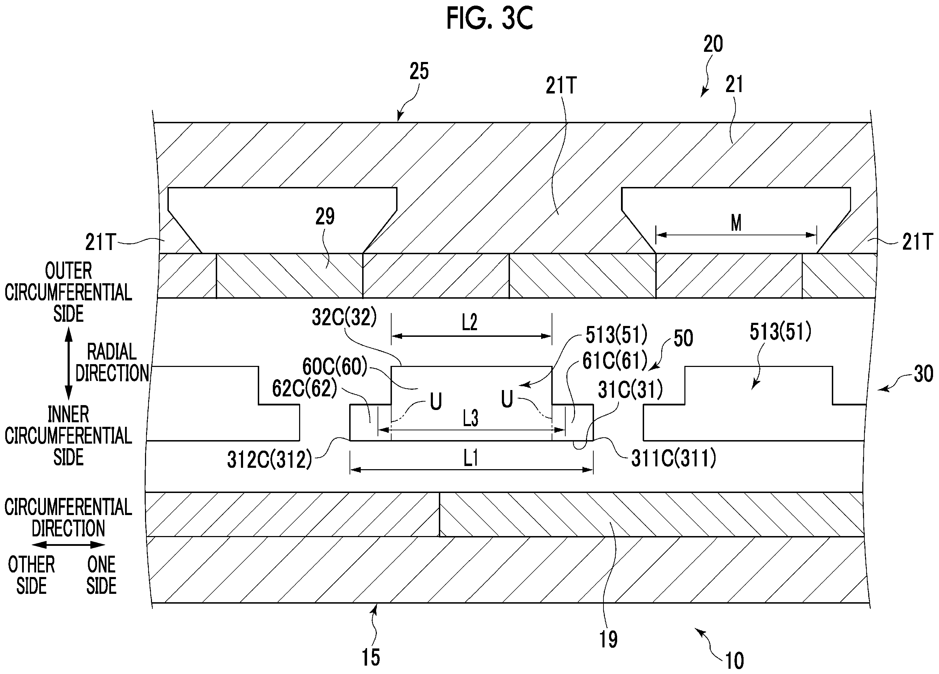

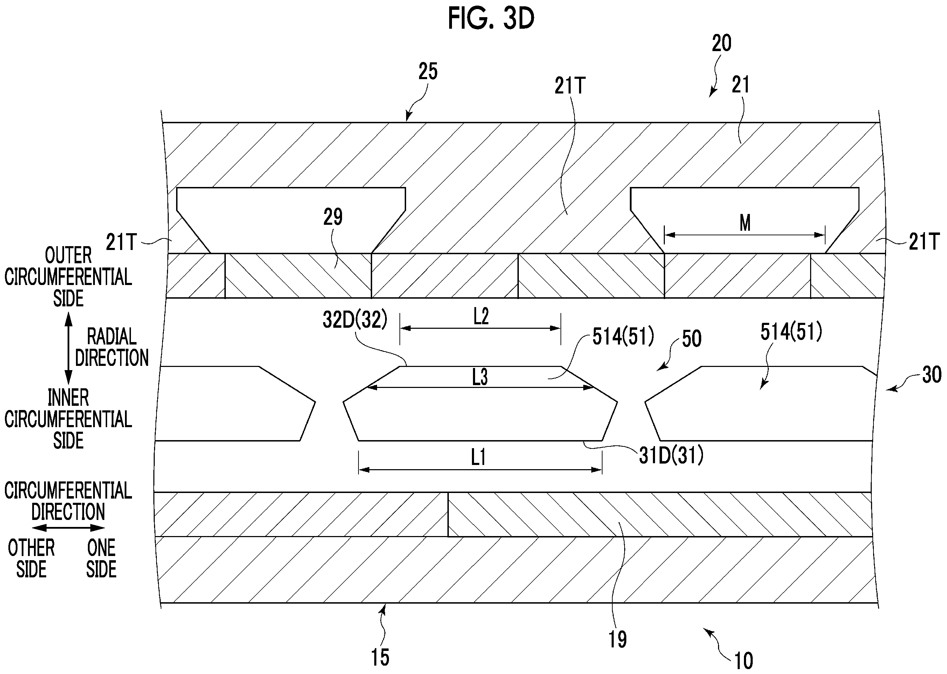

In Fig. 3A, the plurality of magnetic pole pieces 511 are arranged in the circumferential direction, and when at least one magnetic pole piece 511 satisfies the relationship of L1 > L2, the above advantage can be obtained. Similarly in Fig. 3B, at least one of the plurality of magnetic pole pieces 512 may satisfy the relationship of L1 > L2. The same applies to the plurality of magnetic pole pieces 513 and 514 shown in Fig. 3C and Fig. 3D.

Referring to Fig. 3A to Fig. 3C, the shape of the magnetic pole pieces 511 to 513 (51) will be described in detail. The first opposing surfaces 31A to 31C (31) have first ends 311A to 311C (311) that are ends on one side in the circumferential direction and second ends 312A to 312C (312) that are ends on the other side in the circumferential direction. The magnetic pole pieces 511 to 513 have main body portions 60A to 60C (60). The main body portion 60 has the same circumferential length regardless of the radial position (for example, in Fig. 3C, both ends of the main body portion 60C in the circumferential direction are indicated by a two-dot chain line U). The magnetic pole pieces 511 to 513 (51) have first flange portions 61A to 61C (61) protruding from the main body portion 60 to one side in the circumferential direction and second flange portions 62A to 62C (62) protruding from the main body portion 60 to the other side in the circumferential direction. In the example of the same drawings, the first flange portion 61 and the second flange portion 62 have shapes symmetrical to each other in the circumferential direction. However, the first flange portion 61 and the second flange portion 62 may have shapes asymmetrical to each other in the circumferential direction. The first flange portions 61A to 61C (61) have first ends 311A to 311C (311) of the first opposing surface 31, and the second flange portions 62A to 62C (62) have second ends 312A to 312C (312) of the second opposing surface 32.

According to the above configuration, since the magnetic pole piece 51 (50) includes the first flange portion 61 and the second flange portion 62, the circumferential length (L1) of the first opposing surface 31 is increased. This reduces the magnetic resistance between the magnetic pole piece 51 (50) and the first yoke unit 10, and further increases the magnetic flux flowing between the first yoke unit 10 and the second yoke unit 20 through the magnetic pole piece 51 (50). Therefore, the transmission torque is further improved.

In the example of Fig. 3A, when at least one of the plurality of magnetic pole pieces 511 has the first flange portion 61A and the second flange portion 62A, the above advantage can be obtained. Similarly, in Fig. 3B, at least one of the plurality of magnetic pole pieces 512 may have the first flange portion 61B and the second flange portion 62B. The same applies to the plurality of magnetic pole pieces 513 shown in Fig. 3C.

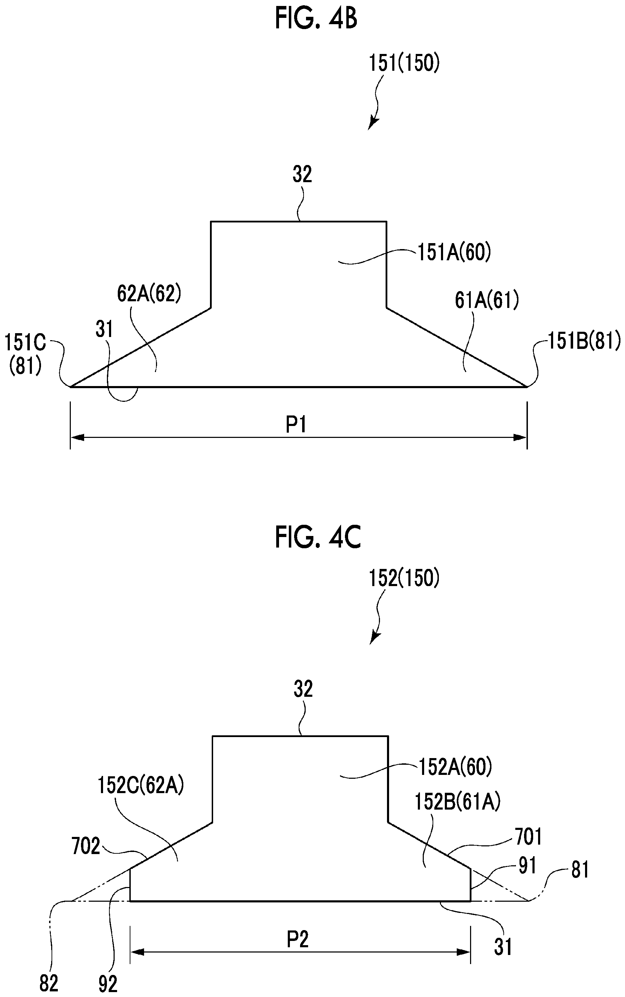

The shape of the magnetic pole pieces 511 and 512 (51) will be described in detail with reference to Figs. 3A and 3B. The first flange portions 61A and 61B (61) are configured such that the length in the radial direction decreases toward the one side. Similarly, the second flange portions 62A and 62B (62) are configured such that the length in the radial direction decreases toward the other side. The first flange portion 61 has first tapered surfaces 701A and 701B (701) inclined with respect to the first opposing surface 31, and the second flange portion 62 has second tapered surfaces 702A and 702B (702) inclined with respect to the first opposing surface 31. The first tapered surface 701 and the second tapered surface 702 may be flat surfaces as shown in Fig. 3A or curved surfaces as shown in Fig. 3B. In the example of Fig. 3A and Fig. 3B, both the first tapered surface 701 and the second tapered surface 702 are directly connected to the first opposing surface 31. In another example, the first flange portion 61 and the second flange portion 62 may be chamfered, that is, the first tapered surface 701 and the second tapered surface 702 may be connected to the first opposing surface 31 via different surfaces (see Fig. 4C). The other surface may be either a flat surface or a curved surface.

According to the above configuration, the first flange portion 61 and the second flange portion 62 are close to the adjacent magnetic pole piece 51 (50) only at the tips. That is, the first flange portion 61 and the second flange portion 62 are partially separated from the adjacent magnetic pole pieces 51. Accordingly, it is possible to prevent the magnetic flux flowing between the two adjacent magnetic pole pieces 51. That is, the leakage magnetic flux is suppressed. Therefore, a decrease in transmission torque due to leakage of magnetic flux can be suppressed.

The shape of the magnetic pole piece 511 (51) will be described in detail with reference to Fig. 3A. The second opposing surface 32A (32) has a third end 323 that is an end on one side in the circumferential direction and a fourth end 324 that is an end on the other side in the circumferential direction. An end of the first flange portion 61A on the second opposing surface 32A side in the radial direction is an end 611, and an end of the second flange portion 62A on the second opposing surface 32 side in the radial direction is an end 621.

The magnetic pole piece 511 (51) has a first connection surface 71 and a second connection surface 72. The first connection surface 71 and the second connection surface 72 are flat surfaces extending along the radial direction. The first connection surface 71 connects the end 611 of the first flange portion 61A and the third end 323 of the second opposing surface 32A, and the second connection surface 72 connects the end 621 of the second flange portion 62A and the fourth end 324 of the second opposing surface 32A. The first connection surface 71 extending along the radial direction may be parallel to the radial direction or substantially parallel to the radial direction. For example, when an acute angle formed by the first connection surface 71 with respect to the radial direction is less than or equal to 5°, it is understood that the first connection surface 71 is substantially parallel to the radial direction. The same applies to the second connection surface 72 extending along the radial direction.

According to the above configuration, the shape of the magnetic pole piece 51 is simplified and manufacturing is easy as compared with a case where the first connection surface 71 and the second connection surface 72 have tapered shapes that approach each other toward the second opposing surface 32A side.

Referring to Fig. 3A to Fig. 3D, the shape of the magnetic pole pieces 511 to 514 (51) will be described in detail. In Fig. 3A to Fig. 3D, L3 represents the average circumferential magnetoresistive length of the magnetic pole pieces 511 to 514 (51). When the length of the magnetic pole piece in the radial direction is denoted by H, and the length of the magnetic pole piece in the circumferential direction at a position h in the radial direction in the magnetic pole piece is denoted by Lh, a magnetoresistive average length L3 of the magnetic pole piece is represented by Expression (A). L3 is understood to be the average length of the magnetic pole piece 50 in the circumferential direction.

$$L3 = \frac{1}{\frac{1}{H}\int_0^H \frac{1}{L_h}dh} \qquad (A)$$

In the example of the same drawings, at least one second tooth portion 21T of the second yoke unit 20 includes a plurality of second tooth portions 21T arranged in the circumferential direction. In a case where an adjacent distance (shortest distance) between two second tooth portions 21T adjacent to each other in the circumferential direction included in the plurality of second tooth portions 21T is denoted as M, the magnetic pole pieces 511 to 514 (51) satisfy a relationship of $0.9 \times$ min {L2, L3} $\leq$ M $\leq 1.1 \times$ max {L2, L3}. Here, min {L2, L3} is a smaller value of L2 and L3, and max {L2, L3} is a larger value of L2 and L3. More preferably, the magnetic pole pieces 511 to 514 (51) satisfy a relationship of $0.95 \times$ min {L2, L3} $\leq$ M $\leq 1.05 \times$ max {L2, L3}. Still more preferably, the magnetic pole pieces 511 to 514 (51) satisfy a relationship of $1.0 \times$ min {L2, L3} $\leq$ M $\leq 1.0 \times$ max {L2, L3}.

When the magnetic flux passing through a specific magnetic pole piece 51 flows in the radial direction between the first yoke unit 10 and the second yoke unit 20 without leaking to the adjacent magnetic pole piece 51, the transmission torque increases. However, when the adjacent distance (M) between two adjacent second tooth portions 21T is too short, the magnetic flux leaks from one second tooth portion 21T to another second tooth portion 21T via the magnetic pole piece 51, and the magnetic flux flowing in the radial direction decreases. In this regard, with the above configuration, it is possible to prevent the adjacent distance between the two second tooth portions 21T from becoming too short, and thus it is possible to prevent the magnetic flux from leaking from one second tooth portion 21T to another second tooth portion 21T via the magnetic pole piece 51 (50). Therefore, the transmission torque can be improved.

In Fig. 3A, the plurality of magnetic pole pieces 511 are arranged in the circumferential direction, and when at least one of the magnetic pole pieces 511 satisfies a relationship of $0.9 \times$ min {L2, L3} $\leq$ M $\leq 1.1 \times$ max {L2, L3} (more preferably a relationship of $0.95 \times$ min {L2, L3} $\leq$ M $\leq 1.05 \times$ max {L2, L3}, and still more preferably a relationship of $1.0 \times$ min {L2, L3} $\leq$ M $\leq 1.0 \times$ max {L2, L3}), the above advantage is obtained. Similarly, in Fig. 3B, at least one of the plurality of magnetic pole pieces 512 may satisfy the relationship of $0.9 \times$ min {L2, L3} $\leq$ M $\leq 1.1 \times$ max {L2, L3} (more preferably the relationship of $0.95 \times$ min {L2, L3} $\leq$ M $\leq 1.05 \times$ max {L2, L3}, and still more preferably the relationship of $1.0 \times$ min {L2, L3} $\leq$ M $\leq 1.0 \times$ max {L2, L3}). The same applies to the plurality of magnetic pole pieces 513 and 514 shown in Fig. 3C and Fig. 3D.

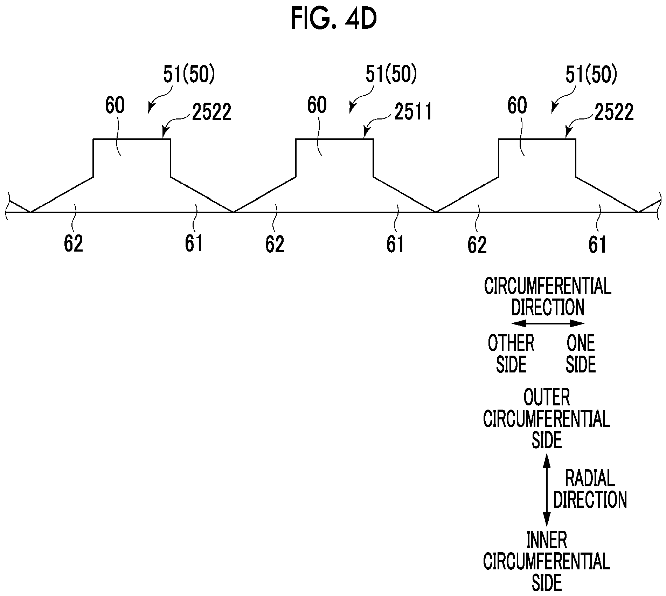

Fig. 4A is a conceptual perspective view of a magnetic pole piece 511 (51) according to an embodiment of the present disclosure. Fig. 4B is a conceptual diagram of the first electromagnetic steel plate 151 according to the embodiment of the present disclosure. Fig. 4C is a conceptual diagram of the second electromagnetic steel plate 152 according to the embodiment of the present disclosure. Fig. 4D is a conceptual diagram of a magnetic pole piece 51 (50) according to an embodiment of the present disclosure. In the same drawing, the circumferential direction is shown linearly.

The first flange portion 61 includes a first edge portion 81, which is a portion of the magnetic pole piece 511 located closest to one side in the circumferential direction, and a first recessed portion 91 recessed from the first edge portion 81 toward the other side in the circumferential direction. The first edge portion 81 extends in the axial direction, and the first recessed portion 91 is open in the radial direction. The second edge portion 82 of the present example may have a shape symmetrical to the first edge portion 81 in the circumferential direction. More specifically, the second flange portion 62 may include a second edge portion 82 that is a portion of the magnetic pole piece 511 located closest to the other side in the circumferential direction, and a second recessed portion 92 recessed from the second edge portion 82 toward the one side in the circumferential direction. The second edge portion 82 extends in the axial direction, and the second recessed portion 92 opens in the radial direction. A plurality of first recessed portions 91 may be provided in the first flange portion 61. In this case, the plurality of first recessed portions 91 are disposed at intervals in the axial direction. Similarly, the second flange portion 62 may have a plurality of second recessed portions 92 disposed at intervals in the axial direction. The plurality of magnetic pole pieces 511 include a first adjacent magnetic pole piece 1511 and a second adjacent magnetic pole piece 1512 adjacent to each other in the circumferential direction. In the same drawing, the second adjacent magnetic pole piece 1512 is located on one side in the circumferential direction with respect to the first adjacent magnetic pole piece 1511. The first flange portion 61 of the first adjacent magnetic pole piece 1511 may face the second flange portion 62 of the second adjacent magnetic pole piece 1512 in the circumferential direction with a gap therebetween. In another example, the first flange portion 61 of the first adjacent magnetic pole piece 1511 may be in contact with the second flange portion 62 of the second adjacent magnetic pole piece 1512. The term "contact" is a concept including bonding.

When the magnetic flux of the magnetic pole piece 51 does not leak to the adjacent magnetic pole piece 51, and the magnetic flux flows in the radial direction between the first yoke unit 10 and the second yoke unit 20, the transmission torque increases. However, when the distance between two adjacent magnetic pole pieces 511 is too short, the magnetic flux leaks to the adjacent magnetic pole pieces 511, and the transmission torque decreases. In this regard, according to the above configuration, since the first recessed portion 91 and the second recessed portion 92 are provided, the first flange portion 61 of the first adjacent magnetic pole piece 1511 and the second flange portion 62 of the second adjacent magnetic pole piece 1512 are partially separated from each other in the circumferential direction. Accordingly, it is possible to prevent the magnetic flux flowing between two adjacent magnetic pole pieces 511. That is, the magnetic flux leakage can be suppressed. Therefore, the transmission torque is further improved.

The configuration of the first flange portion 61 and the second flange portion 62 shown in Fig. 4A may be applied to any of the magnetic pole pieces 512 and 513, or may be applied to the other magnetic pole piece 51. Even in this case, the above-described advantages are obtained.

As shown in Fig. 4A, the first recessed portion 91 of the first adjacent magnetic pole piece 1511 may be disposed so as to overlap at least a part of the second recessed portion 92 of the second adjacent magnetic pole piece 1512 in the axial direction, or the first recessed portion 91 may be disposed so as not to overlap the second recessed portion 92 in the axial direction at all. In the present example, the first recessed portion 91 and the second recessed portion 92 have the same shape, and the first recessed portion 91 of the first adjacent magnetic pole piece 1511 and the second recessed portion 92 of the second adjacent magnetic pole piece 1512 are disposed so as to coincide with each other in the axial direction. In the present example, each of the two magnetic pole pieces 511 includes a plurality of first recessed portions 91 and a plurality of second recessed portions 92, and the plurality of first recessed portions 91 and the plurality of second recessed portions 92 are arranged to coincide with each other in the axial direction.

According to the above configuration, since the gap between the first recessed portion 91 of the first adjacent magnetic pole piece 1511 and the second recessed portion 92 of the second adjacent magnetic pole piece 1512 can be increased, it is possible to more effectively prevent the flow of the magnetic flux between the first adjacent magnetic pole piece 1511 and the second adjacent magnetic pole piece 1512. That is, the leakage magnetic flux can be effectively suppressed.

The configurations of the first flange portion 61 and the second flange portion 62 described above may be applied to the magnetic pole pieces 512 and 513 or may be applied to the other magnetic pole pieces 51. Even in this case, the above-described advantages are obtained.

In each magnetic pole piece 511 extending in the axial direction shown in Fig. 4A, the first recessed portion 91 and the second recessed portion 92 are disposed at the same position in the axial direction. The magnetic pole piece 511 (51) includes a plurality of electromagnetic steel plates 150 stacked in the axial direction. The magnetic pole piece 511 (51) has an axial range in which the first edge portion 81 and the second edge portion 82 are formed and an axial range in which the first recessed portion 91 and the second recessed portion 92 are formed. Therefore, the plurality of electromagnetic steel plates 150 include a first electromagnetic steel plate 151 and a second electromagnetic steel plate 152 having different shapes. The first electromagnetic steel plate 151 forms the first edge portion 81 and the second edge portion 82. More specifically, both ends of the first electromagnetic steel plate 151 in the circumferential direction form the first edge portion 81 and the second edge portion 82, respectively. The second electromagnetic steel plate 152 forms a bottom surface of each of the first recessed portion 91 and the second recessed portion 92. The circumferential length (maximum circumferential length) of the second electromagnetic steel plate 152 is shorter than the circumferential length (maximum circumferential length) of the first electromagnetic steel plate 151. The former circumferential length corresponds to the dimension P2 in Fig. 4C, and the latter circumferential length corresponds to the dimension P1 in Fig. 4B.

In the example of Fig. 4A, the plurality of first electromagnetic steel plates 151 are disposed on one side of the second electromagnetic steel plate 152 in the axial direction, and the plurality of first electromagnetic steel plates 151 are also disposed on the other side of the second electromagnetic steel plate 152 in the axial direction. The first recessed portion 91 and the second recessed portion 92 according to an embodiment may be manufactured before the stacking process of the plurality of electromagnetic steel plates 150. In another embodiment, the specified processing for forming the first recessed portion 91 and the second recessed portion 92 may be executed after the plurality of electromagnetic steel plates 150 are stacked. The specified machining is, for example, drilling.

According to the above configuration, since the bottom surface of each of the first recessed portion 91 and the second recessed portion 92 is formed by the second electromagnetic steel plate 152 included in the plurality of electromagnetic steel plates 150, the configuration of the first recessed portion 91 and the second recessed portion 92 can be simplified.

The configurations of the first flange portion 61 and the second flange portion 62 described above may be applied to the magnetic pole pieces 512 and 513 or may be applied to the other magnetic pole pieces 51. Even in this case, the above-described advantages are obtained.

As shown in Fig. 4B, the first electromagnetic steel plate 151 has a first base portion 151A forming the main body portion 60 of the magnetic pole piece 511, a first corner portion 151B forming the first edge portion 81, and a second corner portion 151C forming the second edge portion 82. The first base portion 151A has the same shape as the main body portion 60 as viewed in the axial direction. The first corner portion 151B is a portion of the first electromagnetic steel plate 151 located closest to one side in the circumferential direction, and the second corner portion 151C is a portion of the first electromagnetic steel plate 151 located closest to the other side in the circumferential direction. The first corner portion 151B and the second corner portion 151C may be symmetrical to each other in the circumferential direction.

As shown in Fig. 4C, the second electromagnetic steel plate 152 includes a second base portion 152A forming the main body portion 60 of the magnetic pole piece 511, a first protrusion portion 152B forming the bottom surface of the first recessed portion 91, and a second protrusion portion 152C forming the bottom surface of the second recessed portion 92.

The second base portion 152A has the same shape as the first base portion 151A. The first protrusion portion 152B protrudes from the second base portion 152A to one side in the circumferential direction, and the second protrusion portion 152C protrudes from the second base portion 152A to the other side in the circumferential direction. The first protrusion portion 152B and the second protrusion portion 152C may be symmetrical to each other in the circumferential direction. The bottom surface of the first recessed portion 91 is formed by the tip of the first protrusion portion 152B, and the bottom surface of the second recessed portion 92 is formed by the tip of the second protrusion portion 152C.

As shown in Fig. 4D, the plurality of magnetic pole pieces 51 (50) arranged in the circumferential direction may include a first specified magnetic pole piece 2511 and a second specified magnetic pole piece 2522 adjacent to each other in the circumferential direction. Each of the first specified magnetic pole piece 2511 and the second specified magnetic pole piece 2522 includes a main body portion 60, a first flange portion 61, and a second flange portion 62. The first flange portion 61 of the first specified magnetic pole piece 2511 and the second flange portion 62 of the second specified magnetic pole piece 2522 are in contact with each other. In the example of Fig. 4D, the plurality of first specified magnetic pole pieces 2511 and the plurality of second specified magnetic pole pieces 2522 are alternately arranged in the circumferential direction. Therefore, the first flange portion 61 of an arbitrary first specified magnetic pole piece 2511 is in contact with the second flange portion 62 of the second specified magnetic pole piece 2522 on one side, and the second flange portion 62 of the first specified magnetic pole piece 2511 is in contact with the first flange portion 61 of the second specified magnetic pole piece 2522 on the other side. The contact may be a bond, for example by welding. In this case, the plurality of first specified magnetic pole pieces 2511 and the plurality of second specified magnetic pole pieces 2522 arranged alternately in the circumferential direction are integrally formed with each other. According to the above configuration, the reinforcing effect of the plurality of magnetic pole pieces 51 can be improved.

<3-2. Magnetic Pole Piece 52 (50) According to Second Example>

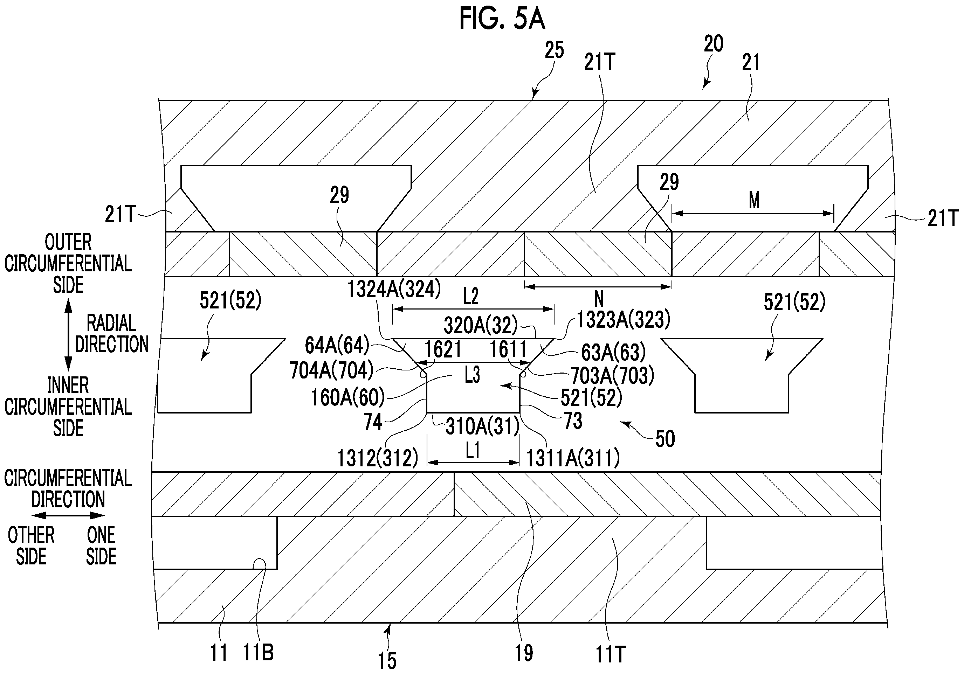

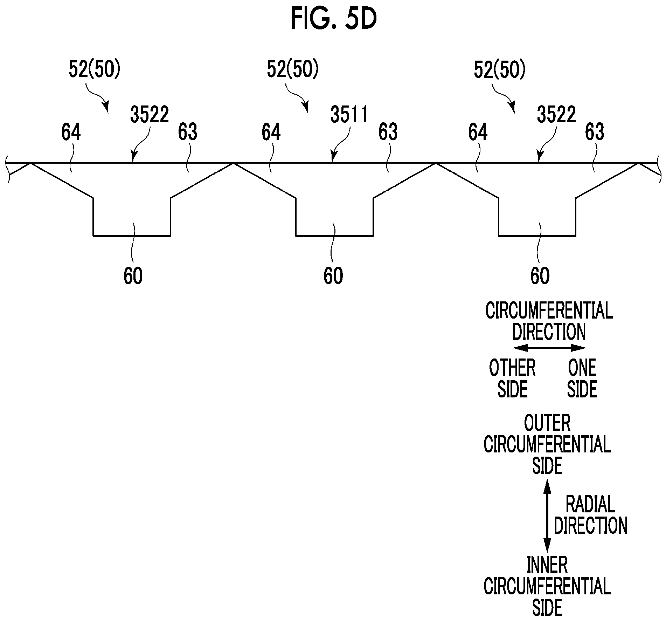

A magnetic pole piece 52 (50) according to a second example will be described with reference to Figs. 5A to 5D. Fig. 5A to Fig. 5C are conceptual diagrams of a magnetic pole piece 52 according to a second example. Fig. 5D is a conceptual diagram of the plurality of magnetic pole pieces 52 (50), and the circumferential direction is shown linearly in the same drawing. The magnetic pole piece 52 according to the second example is applied to an internal structure in which tooth portion are provided in at least the second yoke unit 20 of the first yoke unit 10 or the second yoke unit 20. That is, the internal structure applicable to the magnetic pole piece 52 includes a first internal structure, a second internal structure, a third internal structure, and a fourth internal structure. Hereinafter, an embodiment in which the magnetic pole piece 52 is applied to the third internal structure will be described, and description of embodiments in which the magnetic pole piece 52 is applied to other internal structures will be omitted.

Each of the magnetic pole pieces 521 to 523 (52) shown in Figs. 5A to Fig. 5C has a first opposing surface 310A to 310C (31) facing the first magnet 19 and a second opposing surface 320A to 320C (32) facing the second magnet 29. The second opposing surfaces 320A to 320C have third ends 1323A to 1323C (323), which are ends on one side in the circumferential direction, and fourth ends 1324A to 1324C (324), which are ends on the other side in the circumferential direction. The magnetic pole pieces 521 to 523 (52) satisfy a relationship of $0.9 \times \min \{L2, L3\} \le N \le 1.1 \times \max \{L2, L3\}$, where L2 is a circumferential length of the second opposing surface 32, L3 is an average length of the magnetic pole pieces 52 in the circumferential direction, and N is a circumferential length of each of the second magnets 29. More preferably, the magnetic pole pieces 521 to 523 (52) satisfy a relationship of $0.95 \times \min \{L2, L3\} \le N \le 1.05 \times \max \{L2, L3\}$. Still more preferably, the magnetic pole pieces 521 to 523 (52) satisfy a relationship of $1.0 \times \min \{L2, L3\} \le N \le 1.0 \times \max \{L2, L3\}$.

In addition, the magnetic pole pieces 521 to 523 (52) have main body portions 160A to 160C (60), third flange portions 63A to 63C (63) that protrudes from the main body portion 60 to one side in the circumferential direction, and fourth flange portions 64A to 64C (64) protruding from the main body portion 60 to the other side in the circumferential direction. In the present example, the shape of the main body portion 60 of the magnetic pole piece 52 is the same as the shape of the main body portion 60 according to the first example. Further, in the example of the same drawing, the first flange portion 61 and the second flange portion 62 have shapes symmetrical to each other in the circumferential direction, but may be asymmetrical. The third flange portions 63A to 63C have third ends 1323A to 1323C of the second opposing surface 32, and the fourth flange portions 64A to 64C have fourth ends 1324A to 1324C of the second opposing surface 32.

According to the above configuration, the magnetic pole piece 52 satisfying the relationship of $0.9 \times \min \{L2, L3\} \le N \le 1.1 \times \max \{L2, L3\}$ (more preferably the relationship of $0.95 \times \min \{L2, L3\} \le N \le 1.05 \times \max \{L2, L3\}$, and still more preferably the relationship of $1.0 \times \min \{L2, L3\} \le N \le 1.0 \times \max \{L2, L3\}$) can obtain a continuous magnetic reluctance torque in the process in which the positional relationship between the magnetic pole piece 52 and the second yoke 25 relatively changes in the circumferential direction in accordance with the operation of the magnetic gear 5 (the reason will be described in detail in "<6. Magnetic Pole Piece Satisfying Relationship of $0.9 \times \min \{L2, L3\} \le N \le 1.1 \times \max \{L2, L3\}>$"). Therefore, according to the above configuration, the magnetic gear 5 having the tooth portion that protrudes toward the magnetic pole piece 52 and supports the magnet and improving the transmission torque is realized. Further, according to the knowledge of the inventor, when the magnetic pole piece 52 relatively moves so as to straddle the boundary between two adjacent second magnets 29, the positive and negative of the magnetomotive force are switched. In this regard, according to the above configuration, since the magnetic pole piece 52 has the third flange portion 63 and the fourth flange portion 64, it is possible to partially short-circuit the magnetomotive force that switches between positive and negative, and it is possible to moderate the switching between positive and negative of the magnetomotive force. Thus, the magnetic gear 5 can continue to rotate smoothly.

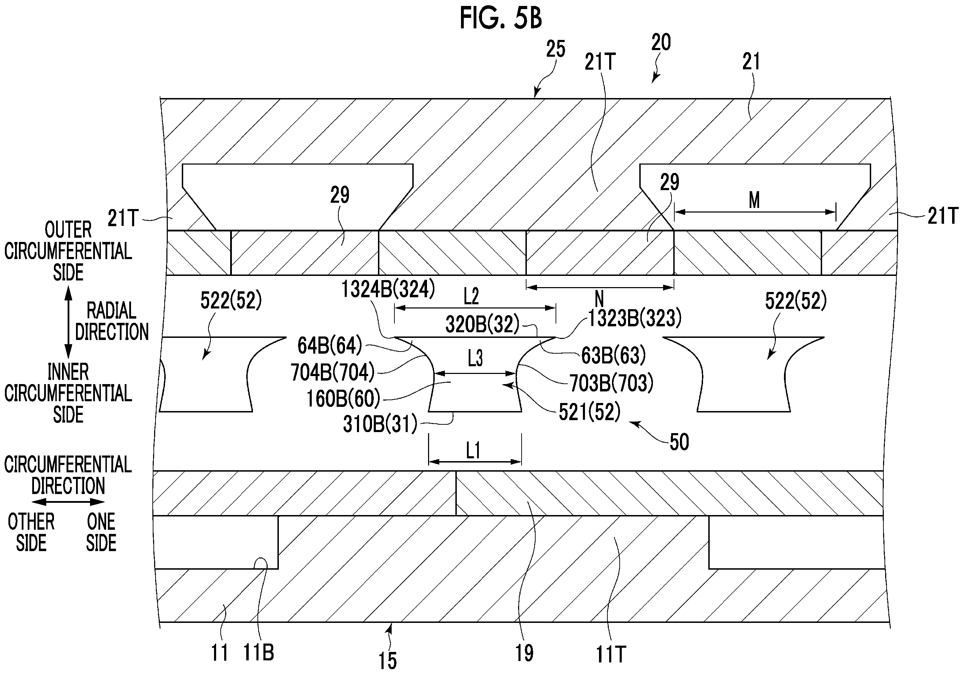

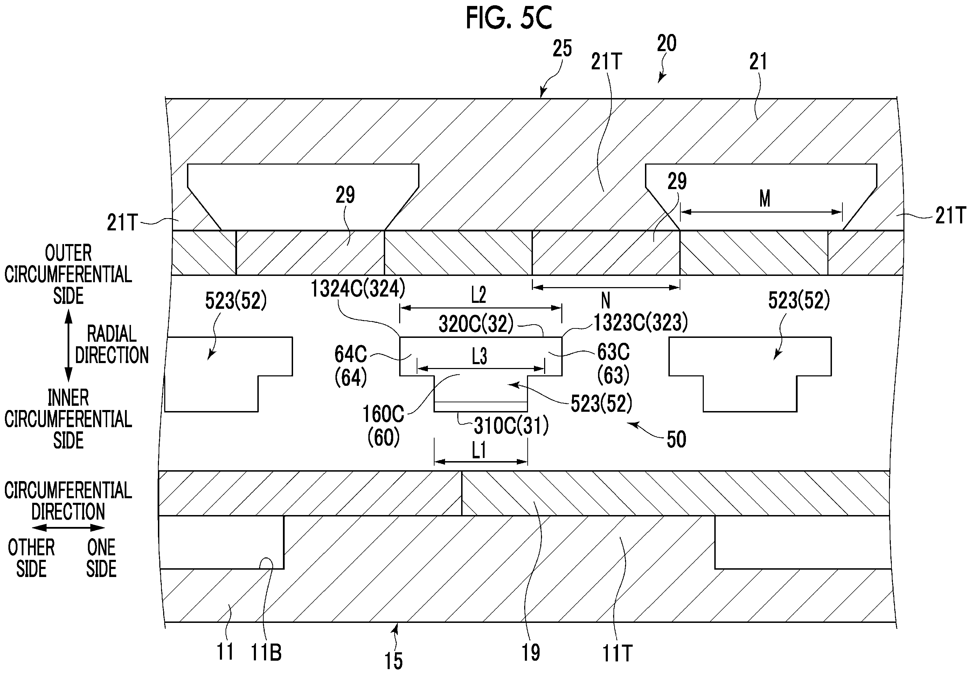

In Fig. 5A, the plurality of magnetic pole pieces 521 are arranged in the circumferential direction, and when at least one of the magnetic pole pieces 521 satisfies a relationship of $0.9 \times \min\{L2, L3\} \le N \le 1.1 \times \max\{L2, L3\}$ (more preferably a relationship of $0.95 \times \min\{L2, L3\} \le N \le 1.05 \times \max\{L2, L3\}$, and still more preferably a relationship of $1.0 \times \min\{L2, L3\} \le N \le 1.0 \times \max\{L2, L3\}$), the above advantage is obtained. Similarly in Fig. 5B, at least one of the plurality of magnetic pole pieces 522 may satisfy the relationship of $0.9 \times \min\{L2, L3\} \le N \le 1.1 \times \max\{L2, L3\}$ (more preferably the relationship of $0.95 \times \min\{L2, L3\} \le N \le 1.05 \times \max\{L2, L3\}$, and still more preferably the relationship of $1.0 \times \min\{L2, L3\} \le N \le 1.0 \times \max\{L2, L3\}$). The same applies to the plurality of magnetic pole pieces 523 shown in Fig. 5C.

The shape of the magnetic pole pieces 521 and 522 (52) will be described in detail with reference to Fig. 5A and Fig. 5B. The third flange portions 63A and 63B (63) are configured such that the length in the radial direction decreases toward the one side. Similarly, the fourth flange portions 64A and 64B (64) are configured such that the length in the radial direction decreases toward the other side. The third flange portion 63 has third tapered surfaces 703A and 703B (703) inclined with respect to the second opposing surface 32, and the second flange portion 62 has fourth tapered surfaces 704A and 704B (704) inclined with respect to the second opposing surface 32. The third tapered surface 703 and the fourth tapered surface 704 may be flat surfaces as shown in Fig. 5A or curved surfaces as shown in Fig. 5B. In the example of Figs. 5A and 5B, both the third tapered surface 703 and the fourth tapered surface 704 are directly connected to the second opposing surface 32. In another example, the third flange portion 63 and the fourth flange portion 64 may be chamfered, that is, the third tapered surface 703 and the fourth tapered surface 704 may be connected to the second opposing surface 32 via different surfaces. The other surface may be either a flat surface or a curved surface.

According to the above configuration, the second opposing surface 32 of the magnetic pole piece 52 can cover the second magnet 29 without excess or deficiency in the circumferential direction, and the magnetic flux flowing between the first yoke unit 10 and the second yoke unit 20 in the radial direction due to the magnetomotive force of the second magnet 29 is maximized, so that the transmission torque is further improved.

When the circumferential length (L2) of the second opposing surface 32 of the magnetic pole piece 50 is smaller than the circumferential length (N) of the second magnet 29, the circumferential length N of the second magnet 29 is excessive with respect to the circumferential length of the magnetic pole piece 50, and the excessive portion of the magnetomotive force of the second magnet 29 is not transmitted to the magnetic pole piece 50 and is wasted. On the other hand, when the circumferential length (N) of the second magnet 29 is larger than the circumferential length (L2) of the second opposing surface 32 of the magnetic pole piece 50, the second opposing surface 32 of the magnetic pole piece 50 is excessive with respect to the circumferential length (N) of the second magnet 29, and the excessive portion of the second opposing surface 32 of the magnetic pole piece 50 receives the magnetomotive force in the opposite direction from the adjacent second magnet 29. Therefore, the magnetomotive force received by the second opposing surface 32 of the magnetic pole piece 50 as a whole is weakened. Thus, it is effective that the second opposing surface 32 of the magnetic pole piece 50 covers the second magnet 29 in the circumferential direction without excess or deficiency.

In the example of Fig. 5A, when at least one of the plurality of magnetic pole pieces 521 has the third flange portion 63A and the fourth flange portion 64A, the above advantage can be obtained. Similarly, in Fig. 5B, at least one of the plurality of magnetic pole pieces 522 may have the third flange portion 63B and the fourth flange portion 64B.

The shape of the magnetic pole piece 521 (52) will be described in detail with reference to Fig. 5A. The first opposing surface 310A has a first end 1311 (311) that is an end on one side in the circumferential direction and a second end 1312 (312) that is an end on the other side in the circumferential direction. An end of the third flange portion 63A on the first opposing surface 31 side in the radial direction is an end 1611, and an end of the fourth flange portion 64A on the first opposing surface 31 side in the radial direction is an end 1621.

The magnetic pole piece 521 (52) has a third connection surface 73 and a fourth connection surface 74. The third connection surface 73 and the fourth connection surface 74 are flat surfaces extending along the radial direction. The third connection surface 73 connects the end 1611 of the third flange portion 63 and the third end 1323A of the second opposing surface 32, and the fourth connection surface 74 connects the end 1621 of the fourth flange portion 64 and the fourth end 1324A of the second opposing surface 32. The third connection surface 73 extending along the radial direction may be parallel to the radial direction or substantially parallel to the radial direction. For example, when an acute angle formed by the third connection surface 73 with respect to the radial direction is less than or equal to 5°, it is understood that the third connection surface 73 is substantially parallel to the radial direction. The same applies to the fourth connection surface 74 extending along the radial direction. According to the above configuration, since the third connection surface 73 and the fourth connection surface 74 extend along the radial direction, the shape of the magnetic pole piece 52 (50) is simplified, and manufacturing can be facilitated.

Referring to Fig. 5A to Fig. 5C, the shape of the magnetic pole pieces 521 to 523 (52) will be described in detail. In the example of the same drawing, at least one second tooth portion 21T of the second yoke unit 20 includes a plurality of second tooth portions 21T arranged in the circumferential direction. In a case where an adjacent distance (shortest distance) between two second tooth portions 21T adjacent to each other in the circumferential direction included in the plurality of second tooth portions 21T is denoted as M as in the first example, the magnetic pole pieces 521 to 523 (52) satisfy a relationship of $0.9 \times \min\{L2, L3\} \leq M \leq 1.1 \times \max\{L2, L3\}$. More preferably, the magnetic pole pieces 521 to 523 (52) satisfy a relationship of $0.95 \times \min\{L2, L3\} \leq M \leq 1.05 \times \max\{L2, L3\}$. Still more preferably, the magnetic pole pieces 521 to 523 (52) satisfy a relationship of $1.0 \times \min\{L2, L3\} \leq M \leq 1.0 \times \max\{L2, L3\}$.

As described above, when the adjacent distance between two adjacent second tooth portions 21T is too short, the magnetic flux leaks from one second tooth portion 21T to another second tooth portion 21T via the magnetic pole piece 52 (50), and the magnetic flux flowing in the radial direction decreases. In this regard, according to the above configuration, it is possible to prevent the adjacent distance between the two second tooth portions 21T from becoming too short, and thus it is possible to prevent the magnetic flux from flowing from one second tooth portion 21T to another second tooth portion 21T via the magnetic pole piece 52. That is, the leakage magnetic flux can be suppressed. Therefore, the transmission torque can be improved.

In Fig. 5A, the plurality of magnetic pole pieces 521 are arranged in the circumferential direction, and when at least one of the magnetic pole pieces 521 satisfies a relationship of $0.9 \times \min\{L2, L3\} \leq M \leq 1.1 \times \max\{L2, L3\}$ (more preferably a relationship of $0.95 \times \min\{L2, L3\} \leq M \leq 1.05 \times \max\{L2, L3\}$, and still more preferably a relationship of $1.0 \times \min\{L2, L3\} \leq M \leq 1.0 \times \max\{L2, L3\}$), the above advantage is obtained. Similarly in Fig. 5B, at least one of the plurality of magnetic pole pieces 522 may satisfy the relationship of $0.9 \times \min\{L2, L3\} \leq M \leq 1.1 \times \max\{L2, L3\}$ (more preferably the relationship of $0.95 \times \min\{L2, L3\} \leq M \leq 1.05 \times \max\{L2, L3\}$, and still more preferably the relationship of $1.0 \times \min\{L2, L3\} \leq M \leq 1.0 \times \max\{L2, L3\}$). The same applies to the plurality of magnetic pole pieces 523 shown in Fig. 5C.

As shown in Fig. 5D, the plurality of magnetic pole pieces 52 (50) arranged in the circumferential direction may include a first specified magnetic pole piece 3511 and a second specified magnetic pole piece 3522 adjacent to each other in the circumferential direction. Each of the first specified magnetic pole piece 3511 and the second specified magnetic pole piece 3522 includes a main body portion 60, a third flange portion 63, and a fourth flange portion 64. The third flange portion 63 of the first specified magnetic pole piece 3511 and the fourth flange portion 64 of the second specified magnetic pole piece 3522 are in contact with each other. In the example of Fig. 4D, the plurality of first specified magnetic pole pieces 3511 and the plurality of second specified magnetic pole pieces 3522 are alternately arranged in the circumferential direction. Therefore, the third flange portion 63 of an arbitrary first specified magnetic pole piece 3511 is in contact with the fourth flange portion 64 of the second specified magnetic pole piece 3522 on one side, and the fourth flange portion 64 of the first specified magnetic pole piece 3511 is in contact with the third flange portion 63 of the second specified magnetic pole piece 3522 on the other side. The contact may be a bond, for example by welding. In this case, the plurality of first specified magnetic pole pieces 3511 and the plurality of second specified magnetic pole pieces 3522 arranged alternately in the circumferential direction are integrally formed with each other. According to the above configuration, the reinforcing effect of the plurality of magnetic pole pieces 52 (50) can be improved.

<3-3. Magnetic Pole Piece 53 (50) According to Third Example>

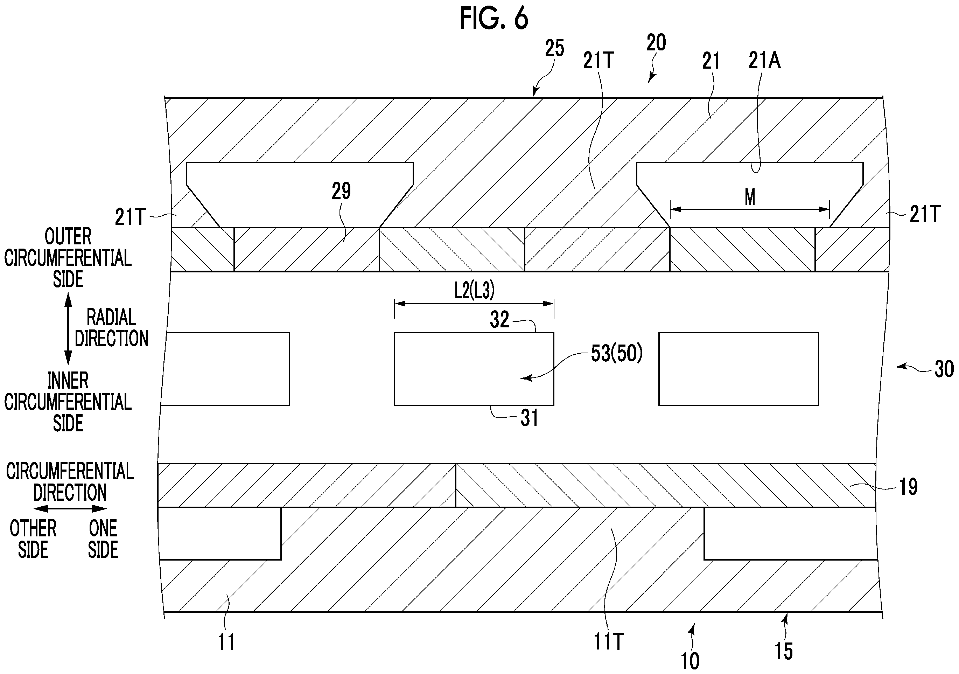

Fig. 6 is a conceptual diagram of a magnetic pole piece 53 (50) according to a third example. The magnetic pole piece 53 is applied to an internal structure in which a tooth portion is provided in at least the second yoke unit 20 of the first yoke unit 10 or the second yoke unit 20. That is, the internal structure applicable to the magnetic pole piece 53 includes a first internal structure, a second internal structure, a third internal structure, and a fourth internal structure. Hereinafter, an embodiment in which the magnetic pole piece 53 is applied to the third internal structure will be described, and description of embodiments in which the magnetic pole piece 53 is applied to other internal structures will be omitted.

As described above, the magnetic pole piece 53 (50) includes the first opposing surface 31 facing the first magnet 19 and the second opposing surface 32 facing the second magnet 29. At least one second tooth portion 21T of the second yoke 25 includes a plurality of second tooth portions 21T arranged in the circumferential direction. Further, in the example of the same drawing, the first yoke 15 includes a plurality of first tooth portions 11T arranged in the circumferential direction.

Similarly to the second example, when the circumferential length of the second opposing surface 32 is L2, the average length of the magnetic pole pieces 53 in the circumferential direction is L3, and the adjacent distance between two adjacent second tooth portions 21T included in the plurality of second tooth portions 21T is M, at least one of the plurality of magnetic pole pieces 53 satisfies a relationship of $0.9 \times \min\{L2, L3\} \leq M \leq 1.1 \times \max\{L2, L3\}$ (more preferably a relationship of $0.95 \times \min\{L2, L3\} \leq M \leq 1.05 \times \max\{L2, L3\}$, and still more preferably a relationship of $1.0 \times \min\{L2, L3\} \leq M \leq 1.0 \times \max\{L2, L3\}$). The shape of the magnetic pole piece 53 (50) shown in Fig. 6 is merely an example. For example, there is no problem even if any shape of the magnetic pole pieces 511 to 514 (51) according to the first example or the magnetic pole pieces 521 to 523 (52) according to the second example is applied to the magnetic pole piece 53.

As described above, when the adjacent distance between the two adjacent second tooth portions 21T is too short, the magnetic flux flows from the second tooth portion 21T to the adjacent second tooth portion 21T via the magnetic pole piece 53, and the magnetic flux flowing in the radial direction decreases. In this regard, according to the above configuration, it is possible to prevent the adjacent distance between the two second tooth portions 21T from becoming too short, and thus it is possible to prevent the magnetic flux from flowing from the second tooth portion 21T to the adjacent second tooth portion 21T via the magnetic pole piece 53. That is, the leakage magnetic flux can be suppressed. Therefore, the magnetic gear 5 having the tooth portion that protrudes toward the magnetic pole piece 53 and supports the magnet and having improved transmission torque is realized.

<4. Additional Description of Internal Structure to which Magnetic Pole Pieces 52 and 53 (50) are Applied>

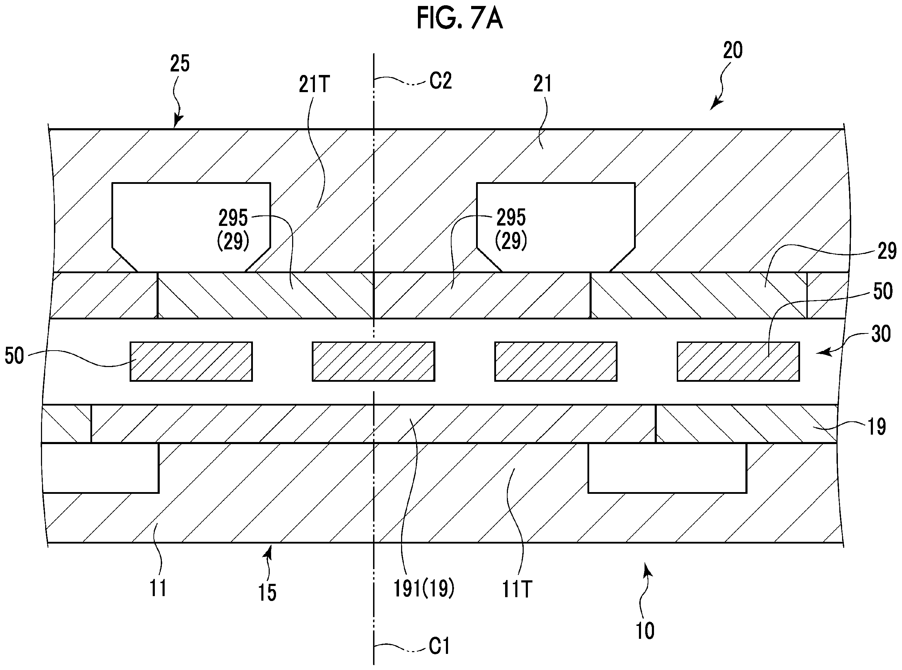

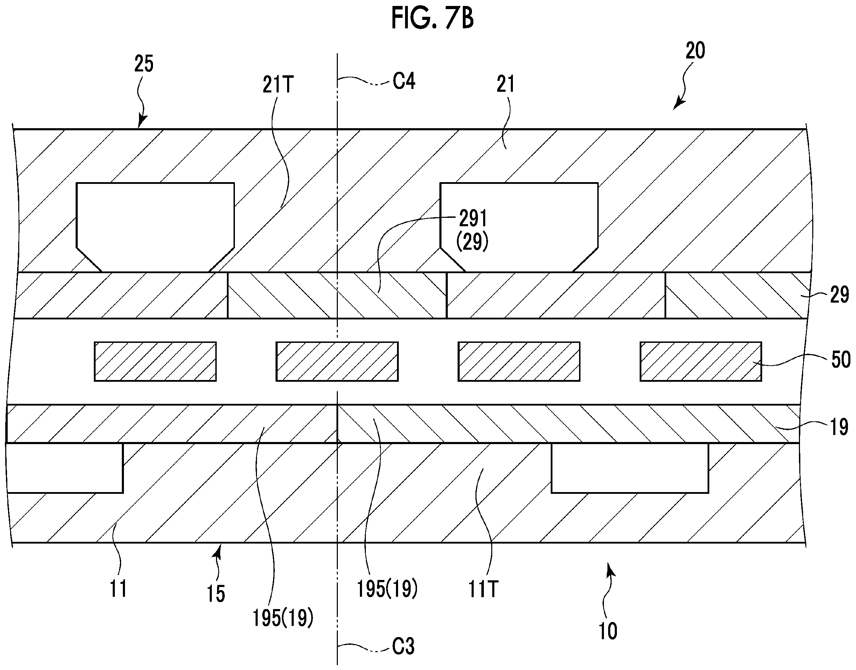

As described above, the internal structure applicable to the magnetic pole pieces 52 and 53 (50) includes the third internal structure and the fourth internal structure. Additional configurations in these internal structures will be described with reference to Figs. 7A and 7B showing a third internal structure. In order to avoid redundant description, the same description of the fourth internal structure is omitted. Fig. 7A is a schematic diagram showing a third internal structure according to an embodiment, and Fig. 7B is a schematic diagram showing a third internal structure according to another embodiment. In both drawings, at least one first tooth portion 11T includes a plurality of first tooth portions 11T arranged in the circumferential direction, and at least one second tooth portion 21T includes a plurality of second tooth portions 21T arranged in the circumferential direction.
In both the embodiments shown in Figs. 7A and 7B, the ratio of the number (p1) of the plurality of first magnets 19 to the number (h1) of the plurality of first tooth portions 11T is equal to the ratio of the number (p2) of the plurality of second magnets 29 to the number (h2) of the plurality of second tooth portions 21T. That is, the following Formula (B) is established.

$$p1{:}h1 = p2{:}h2 \ ... \ \text{Formula (B)}$$

Note that p1 is the number of poles of the plurality of first magnets 19, and p2 is the number of poles of the plurality of second magnets 29.
As described above, the plurality of first magnets 19 are configured by N-pole magnets and S-pole magnets alternately arranged in the circumferential direction, and the plurality of second magnets 29 also have the same configuration. According to the above configuration, since Expression (B) is satisfied, when the magnetic gear 5 operates, the cycle in which the first magnet 19 facing the magnetic pole piece 52 (50) is switched from one of the N-pole magnet and the S-pole magnet to the other coincides with the cycle in which the second magnet 29 facing the magnetic pole piece 52 (50) is switched from one of the N-pole magnet and the S-pole magnet to the other. In the following description, the same two cycles may be referred to as a prescribed cycle.
The plurality of first magnets 19 shown in Fig. 7A include first specified magnets 191. In the circumferential direction, the center of the first specified magnet 191 coincides with the center of the first tooth portion 11T supporting the first specified magnet 191. Both centers shown in Fig. 7A are on a two-dot chain line C1 parallel to the radial direction. In the present example, in another first tooth portion 11T adjacent to the first tooth portion 11T supporting the first specified magnet 191, the center of the first tooth portion 11T and the center of the first magnet 19 do not coincide with each other in the circumferential direction. In another example, the above-described first specified magnet 191 may be disposed in each of the plurality of first tooth portions 11T. When the shortest distance in the circumferential direction between the center of the first specified magnet 191 and the center of the first tooth portion 11T is less than 10% of the circumferential length of the first specified magnet 191, it is understood that both centers coincide with each other.
Further, the plurality of second magnets 29 include second adjacent magnets 295 adjacent to each other in the circumferential direction. In the circumferential direction, any one of the intermediate points of the two second adjacent magnets 295 coincides with the center of the single second tooth portion 21T supporting the two second adjacent magnets 295. The intermediate point and the center are on a two-dot chain line C2 parallel to the radial direction in the example of Fig. 7A. In the present example, in another second tooth portion 21T adjacent to the second tooth portion 21T in which the two second adjacent magnets 295 are provided, the center of the second tooth portion 21T does not coincide with the intermediate point between the two adjacent second magnets 29 in the circumferential direction. In another example, two second adjacent magnets 295 may be disposed in each of the plurality of second tooth portions 21T. When the shortest distance in the circumferential direction between the intermediate point between the two second adjacent magnets 295 and the center of the single second tooth portion 21T is less than 10% of the circumferential length of the second magnet 29, it is understood that the intermediate point and the center coincide with each other.
According to the knowledge of the inventor, it is effective to separate the phase relationship between the second tooth portion 21T and the second adjacent magnet 295 from the phase relationship between the first tooth portion 11T and the first adjacent magnet 195 by 180 degrees in order to improve the transmission torque (the reason is described in "<7. Relationship between Position of Tooth Portion, Position of Magnet, and Transmission Torque>"). In this regard, according to the above-described configuration, the timing at which the first magnet 19 facing the magnetic pole piece 50 is switched from one of the N-pole magnet and the S-pole magnet to the other and the timing at which the second magnet 29 facing the magnetic pole piece 50 is switched from one of the N-pole magnet and the S-pole magnet to the other are shifted from each other by half of the above-described specified period, that is, 180 degrees in the specified period. As a result, the timing at which the second magnet 29 is switched from one of the N-pole magnet and the S-pole magnet to the other in the second tooth portion 21T and the timing at which the first magnet 19 is switched from one of the N-pole magnet and the S-pole magnet to the other in the first tooth portion 11T are generated at equal intervals shifted by 180 degrees in the specified cycle, and the generated torque is temporally equalized. Further, in Fig. 7A, the magnetomotive force exerted by the first magnet 19 on the magnetic pole piece 50 is maximized, but the N magnetic pole and the S magnetic pole cancel each other out in the second magnet 29, and the magnetomotive force from the second magnet does not act on the magnetic pole piece 50. Accordingly, it is possible to prevent the transmission torque of the magnetic gear 5 from decreasing due to the magnetic flux saturation.

In another embodiment shown in Fig. 7B, the plurality of first magnets 19 include two first adjacent magnets 195 adjacent to each other in the circumferential direction. In the circumferential direction, the intermediate point between the two first adjacent magnets 195 coincides with the center of the single first tooth portion 11T supporting the two first adjacent magnets 195. The intermediate point and the center are on a two-dot chain line C3 parallel to the radial direction. In the present example, in another first tooth portion 11T adjacent to the first tooth portion 11T in which the two first adjacent magnets 195 are provided, the center of the first tooth portion 11T does not coincide with the intermediate point between the two adjacent first magnets 19 in the circumferential direction. In another example, two first adjacent magnets 195 may be disposed in each of the plurality of first tooth portions 11T. When the shortest distance in the circumferential direction between the intermediate point between the two first adjacent magnets 195 and the center of the single first tooth portion 11T is less than 10% of the circumferential length of the first magnet 19, it is understood that the intermediate point and the center coincide with each other.

Further, the plurality of second magnets 29 include a second specified magnet 291. In the circumferential direction, the center of the second specified magnet 291 coincides with the center of the single second tooth portion 21T supporting the second specified magnet 291. Both centers shown in Fig. 7B are on a two-dot chain line C4 parallel to the radial direction. In the present example, in another second tooth portion 21T adjacent to the second tooth portion 21T supporting the second specified magnet 291, the center of the second tooth portion 21T and the center of the second magnet 29 do not coincide with each other in the circumferential direction. In another example, the second specified magnet 291 described above may be disposed in each of the plurality of second tooth portions 21T. When the shortest distance in the circumferential direction between the center of the second specified magnet 291 and the center of the second tooth portion 21T is less than 10% of the circumferential length of the second specified magnet 291, it is understood that both centers coincide with each other.

In the example of Fig. 7B, the two-dot chain lines C3 and C4 coincide with each other in the circumferential direction. That is, the intermediate point between the two first adjacent magnets 195, the center of the first tooth portion 11T, the center of the second specified magnet 291, and the center of the second tooth portion 21T coincide with each other in the circumferential direction. When the shortest distance in the circumferential direction between two points at both ends in the circumferential direction among these centers or intermediate points is less than 3% of the circumferential length of the second magnet 29, it is understood that these centers and intermediate points coincide with each other in the circumferential direction.

According to the above configuration, the timing at which the first magnet 19 facing the magnetic pole piece 50 is switched from one of the N-pole magnet and the S-pole magnet to the other and the timing at which the second magnet 29 facing the magnetic pole piece 50 is switched from one of the N-pole magnet and the S-pole magnet to the other are shifted from each other by a half of the above-described specified period. Accordingly, the magnetic gear 5 can improve the transmission torque.

<5. Regarding Magnetic Pole Piece 51 (50) satisfying Relationship of L1 > L2>

It is sensuously understood that the reason why the transmission torque is improved as the relationship of L1 > L2 is satisfied is that the magnetic flux passing through the inside of the magnetic pole piece 50 can be increased and the leakage magnetic flux can be reduced by increasing the circumferential length of the first opposing surface 31 of the magnetic pole piece 51 (50). This will be described below using equations. Fig. 8 is a conceptual diagram showing an electromagnetic force and permeance in the first internal structure.

When the magnetic moment of a unit volume of an object or space (hereinafter, sometimes referred to as an object) is denoted by M and the magnetic permeability of the object is denoted by $\mu$, the energy of the magnetic field of the unit volume of the object is represented by the following equation (1).

$$W = \mu M^2/2 \ ... \ (1)$$

The formula (1) is applied to the first internal structure shown in the same drawing and examined. In the first internal structure of the same drawing, the second yoke unit 20 is a stator, and both the first yoke unit 10 and the magnetic pole piece unit 30 are rotors. Hereinafter, of the magnetic flux between the first yoke 15 and the second yoke 25, the magnetic flux that does not pass through the magnetic pole piece 50 is regarded as 0.

In addition, in the following description, a distance from a rotation center (hereinafter, also simply referred to as an axial center) of the magnetic gear 5 to the outer circumferential surface 11B of the first main body portion 11 (one end surface of the first magnet 19) is R1. A distance from the axial center to one end surface of the second magnet 29 facing the magnetic pole piece 50 is defined as R2. A distance from the axial center to the other end surface of the second magnet 29 (the tip of the second tooth portion 21T) is defined as R3. The radial lengths of the first magnet 19, the magnetic pole piece 50, and the second magnet 29 are $t_1$, $t_2$, and $t_3$, respectively. The radial lengths of the gap G1 (see Fig. 2A) and the gap G2 (see Fig. 2A) are $t_{12}$ and $t_{23}$, respectively.

A magnetic flux between the magnetic pole piece 50 and the second tooth portion 21T is considered. The position of the magnetic gear 5 in the circumferential direction is represented by $\theta$. The magnetic pole piece 50 and the second tooth portion 21T are arranged in the radial direction in a section where $\theta_{LT} \leq \theta \leq \theta_{RT}$. A rectangle indicated by a two-dot chain line J1 in the same drawing is a region in which the magnetic pole piece 50 and the second tooth portion 21T are arranged. When $t_2 + t_3 \ll R_2$, the permeance $g_T$ of the magnetic pole piece 50 and the second tooth portion 21T is represented by the following equation (2), where L is the axial length of the second tooth portion 21T.

$$g_T = \mu L R_2 \frac{\theta_{RT} - \theta_{LT}}{t_3 + t_{23}} \qquad (2)$$

The magnetomotive force $F_T$ acting on the second tooth portion 21T and the magnetic pole piece 50 can be approximated by the following equation (3), where $M_{3\theta}$ is the magnetic moment of the second magnet 29 at the position $\theta$. The value of $M_{3\theta}$ is +M or -M depending on $\theta$.

$$F_T = \frac{t_3}{\theta_{RT} - \theta_{LT}} \int_{\theta_{LT}}^{\theta_{RT}} M_{3\theta} d\theta \qquad (3)$$

When the magnetic potential of the magnetic pole piece 50 is $F_2$, the magnetic flux $\varphi_T$ between the second tooth portion 21T and the magnetic pole piece 50 is represented by the following equation (4). The direction of the magnetic flux $\varphi_T$ between the second tooth portion 21T and the magnetic pole piece 50 is defined such that the direction from the magnetic pole piece 50 to the second tooth portion 21T is positive.

$$\varphi_T = g_T(F_T - F_2) \ ... \ (4)$$

Next, the magnetic flux between the magnetic pole piece 50 and the first yoke 15 will be considered. In the example of the same drawing, the first yoke 15 is not provided with a tooth portion, and the magnetic pole pieces 50 are arranged in the radial direction as a whole with respect to the first yoke 15. A region surrounded by a rectangle indicated by a two-dot chain line J2 in the same drawing corresponds to this. When $t_1 + t_2 \ll R_1$, the permeance $g_B$ of the magnetic pole piece 50 and the first yoke 15 is represented by the following equation (5), where L is the axial length of the first tooth portion 11T.

$$g_B = \mu L R_2 \frac{\theta_{RB} - \theta_{LB}}{t_1 + t_{23}} \qquad (5)$$

The magnetomotive force $F_B$ acting on the magnetic pole piece 50 and the first yoke 15 is represented by the following equation (6), where $M_{1\theta}$ is the magnetic moment of the magnetic pole of the first yoke 15 at the position $\theta$. The value of $M_{1\theta}$ is +M or -M depending on $\theta$.

$$F_B = \frac{t_1}{\theta_{RB} - \theta_{LB}} \int_{\theta_{LB}}^{\theta_{RB}} M_{1\theta} d\theta \qquad (6)$$

A magnetic flux $\varphi_B$ between the magnetic pole piece 50 and the first yoke 15 is represented by the following equation (7). The direction of the magnetic flux $\varphi_T$ between the first yoke 15 and the magnetic pole piece 50 is positive in the direction from the first yoke 15 to the magnetic pole piece 50.

$$\varphi_B = g_B \left(F_B - F_2\right) \dots (7)$$

Since it is obvious that $\varphi_T = \varphi_L$, the following equation (8) is obtained from the equations (4) and (7).

$$\phi = \frac{g_T g_B}{g_T + g_B}(F_T + F_B) \qquad (8)$$

When the permeance between the first yoke 15 and the second yoke 25 is represented by an expression $g_{TB}$, $g_{TB}$ is represented by the following expression (9).

$$g_{TB} = \frac{g_T g_B}{g_T + g_B} \qquad (9)$$

Expression (8) can be represented by Expression (8A).

$$\varphi = g_{TB} \left(F_T - F_B\right) \dots (8A)$$

From Expression (1) and Expression (8A), the energy $W_{TB}$ of the magnetic field between the first yoke 15 and the second yoke 25 is represented by Expression (10).

$$W_{TB} = \frac{1}{2} g_{TB}(F_T + F_B)^2 \qquad (10)$$

The torque generated in the first yoke 15 and the magnetic pole piece 50 is obtained by partially differentiating the energy of the magnetic flux between the first yoke 15 and the second yoke 25 at each position. The torque $T_1$ generated in the first yoke 15 by the magnetic flux $\varphi_L$ passing through the magnetic pole piece 50 is represented by the following equation (11), where $\theta_1$ is the position of the first yoke 15.

$$T_1 = \frac{1}{2}\frac{\partial g_{TB}}{\partial \theta_1}(F_T + F_B)^2 + g_{TB}(F_T + F_B)\left(\frac{\partial F_T}{\partial \theta_1} + \frac{\partial F_B}{\partial \theta_1}\right) \qquad (11)$$

Similarly, the torque $T_2$ generated in the magnetic pole piece 50 by the magnetic flux $\varphi$ is represented by the following equation (12) when the position of the magnetic pole piece 50 is $\theta_2$.

$$T_2 = \frac{1}{2}\frac{\partial g_{TB}}{\partial \theta_2}(F_T + F_B)^2 + g_{TB}(F_T + F_B)\left(\frac{\partial F_T}{\partial \theta_2} + \frac{\partial F_B}{\partial \theta_2}\right) \qquad (12)$$

It is considered to increase the torque $T_2$ generated in the magnetic pole piece 50. The torque $T_2$ is the sum of a term proportional to the gradient $\partial g_{TB}/\partial \theta_2$ of the permeance in the first term on the right side and a term proportional to the gradient $\partial F_{TB}/\partial \theta_2 + \partial F_B/\partial \theta_2$ of the magnetomotive force in the second term on the right side, as shown in Expression (12). The term proportional to the gradient of the permeance is the force with which the magnet attracts the magnetic pole piece 50, and is the magnetic reluctance torque. The term proportional to the gradient of the magnetomotive force is a repulsive force and an attractive force acting on the magnets and is a magnet torque. With respect to the magnetic reluctance torque, the gradient of the permeance changes depending on the position of the first yoke 15 as shown in Expression (13). Equation (13) is simplified using the fact that only the permeance $g_T$ between the first tooth portion 11T and the magnetic pole piece 50 is affected by the first yoke 15, and the permeance $g_B$ between the first yoke 15 and the magnetic pole piece 50 is irrelevant to the magnetic pole piece 50.

$$\begin{aligned}
\frac{\partial g_{TB}}{\partial \theta_2} &= \frac{\partial g_{TB}}{\partial g_T}\frac{\partial g_T}{\partial \theta_2} + \frac{\partial g_{TB}}{\partial g_B}\frac{\partial g_B}{\partial \theta_2} \\
&= \frac{\left(\frac{\partial g_T}{\partial \theta_2}g_B + g_B\frac{\partial g_B}{\partial \theta_2}\right)(g_T + g_B) - g_T g_B\left(\frac{\partial g_T}{\partial \theta_2} + \frac{\partial g_B}{\partial \theta_2}\right)}{(g_T + g_B)^2} \\
&= \frac{\left(\frac{\partial g_T}{\partial \theta_2}g_B + 0\right)(g_T + g_B) - g_T g_B\left(\frac{\partial g_T}{\partial \theta_2} + 0\right)}{(g_T + g_B)^2} \\
&= \frac{\partial g_T}{\partial \theta_2}\left(\frac{g_B}{g_T + g_B}\right)^2
\end{aligned} \tag{13}$$

It can be seen from Equation (13) that, by increasing $g_B$, the value of the first term of Equation (12) increases, and the torque generated in the magnetic pole piece unit 30 also increases. In order to increase $g_B$, for example, the circumferential length of the first opposing surface 31 may be increased. That is, it is understood that the transmission torque is improved by setting L1 > L2. When the number of the magnetic pole pieces 50 is smaller than the number of the magnetic poles of the first yoke 15, L1 may be increased to such an extent that two adjacent magnetic pole pieces 50 are in contact with each other.

In the first internal structure shown in the same drawing, the same conclusion can be obtained when the magnetic pole piece unit 30 is a stator and the first yoke unit 10 and the second yoke unit 20 are rotors. The same conclusion can be obtained even when the second internal structure, the fifth internal structure, and the sixth internal structure are employed.

<6. Magnetic Pole Piece Satisfying Relationship of 6. 0.9 × min {L2, L3} ≤ N ≤ 1.1 × max {L2, L3}>

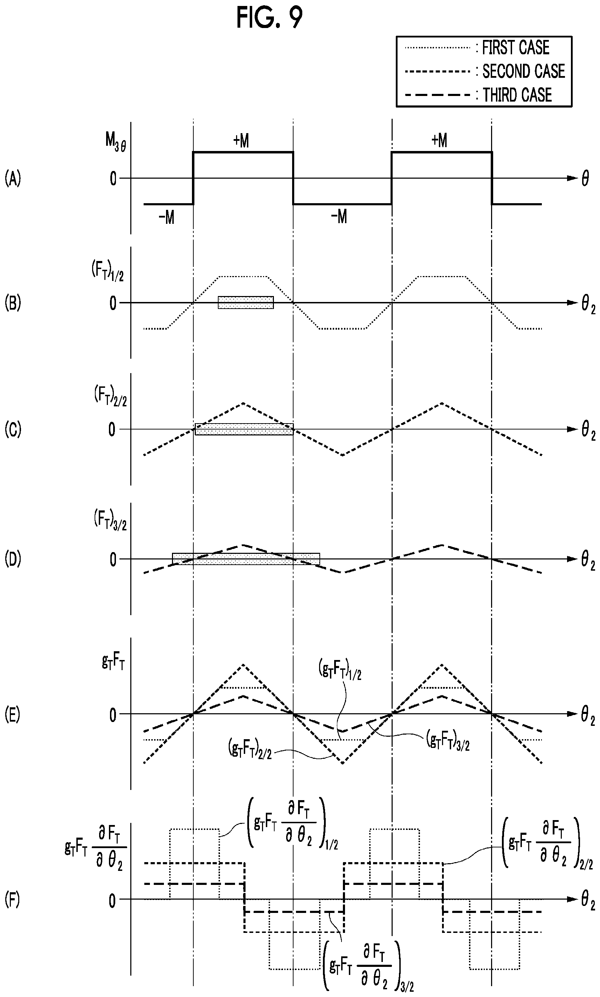

The reason why the transmission torque is improved when the magnetic pole piece 50 satisfying 0.9 × min {L2, L3} ≤ N ≤ 1.1 × max {L2, L3} is employed will be described with reference to Fig. 9. The reason for this is sensuously understood as follows. That is, when the circumferential length of the magnetic pole piece 50 is too short (1.1 × max {L2, L3} < N), one magnetic pole piece 50 cannot face a specific second magnet 29 (N-pole magnet or S-pole magnet) over the entire circumferential length. A part of the second magnet 29 that does not face the magnetic pole piece 50 becomes a surplus portion that cannot affect the magnetomotive force of the magnetic pole piece 50, and is wasted. On the other hand, when the circumferential length of the magnetic pole piece 50 is too long (0.9 × min {L2, L3} > N), one magnetic pole piece 50 always faces two adjacent second magnets 29. Since the two magnetomotive forces caused by the two second magnets 29 are opposite to each other, the magnetomotive force acting on the magnetic pole piece 50 is weakened as a whole.

This will be described below using equations. Fig. 9 is a conceptual graph showing various parameters corresponding to the circumferential positions of the plurality of magnetic pole pieces 50 having different circumferential lengths.

As described above, the magnetomotive force $F_T$ acting on the magnetic pole piece 50 and the second tooth portion 21T is represented by the equation (3). (A) of the same drawing shows the magnetic moment $M_{3\theta}$ of the second magnet 29 according to the circumferential position. As shown in (A) of the same drawing, the second magnets 29 (that is, the N-pole magnets and the S-pole magnets) are arranged in the circumferential direction so that the polarities of the magnetic moments of the second magnets 29 are reversed in the order of -M, +M, and .... Considering a case where the second magnet 29 is covered inside the arc of the second tooth portion 21T, the magnetomotive force $F_T$ acting on the magnetic pole piece 50 is proportional to an average value of magnetic moments of portions of the magnetic pole piece 50 arranged with the second tooth portion 21T in the radial direction. In the same drawing, (B) shows the magnetomotive force $(F_T)_{1/2}$ when the circumferential length of the magnetic pole piece 50 is half the circumferential length of the second magnet 29, (C) shows the magnetomotive force $(F_T)_{2/2}$ when the circumferential length of the magnetic pole piece 50 is equal to the circumferential length of the second magnet 29, and (D) shows the magnetomotive force $(F_T)_{3/2}$ when the circumferential length of the magnetic pole piece 50 is 1.5 times the circumferential length of the second magnet 29. Hereinafter, a case where the circumferential length of the magnetic pole piece 50 is half the circumferential length of the magnetic pole of the second tooth portion 21T is referred to as a first case, a case where the circumferential length of the magnetic pole piece 50 is equal to the circumferential length of the magnetic pole of the second tooth portion 21T is referred to as a second case, and a case where the circumferential length of the magnetic pole piece 50 is 1.5 times the circumferential length of the magnetic pole of the second tooth portion 21T is referred to as a third case. (E) of the same drawing shows $g_T F_T$ according to $\theta_2$, and (F) of the same drawing shows $g_T F_T \cdot \partial F_1/\partial \theta_2$ according to $\theta_2$. $\theta_2$ is the circumferential position of the circumferential center of the magnetic pole piece 50.

The gradient $\partial F_1/\partial \theta_2$ of the magnetomotive force of $(F_T)_{1/2}$ in the first case is the largest among the three, but there is a section in which the gradient is zero. The torque $(g_T F_T \cdot \partial F_T / \partial \theta_2)_{1/2}$ in the first case is disadvantageous in that the torque due to the gradient of the magnetomotive force becomes zero in the section where the gradient is zero, and the torque becomes intermittent. On the other hand, in the second case, the torque $(g_T F_T \cdot \partial F_T / \partial \theta_2)_{2/2}$ can be obtained without interruption. This is advantageous in reducing vibration. This advantage is obtained when the circumferential length (L2) of the magnetic pole piece 50 is equal to or longer than the circumferential length (N) of the second magnet 29.

In the third case, since the magnetic pole piece 50 faces the two second magnets 29 (the N-pole magnet and the S-pole magnet) on both the positive and negative sides, cancellation of the magnetic moments occurs. Therefore, as shown in (D) of the same drawing, the peak of the magnetomotive force $(F_T)_{3/2}$ in the third case is smaller than those in the other two cases. The torque is proportional to the gradient of the magnetomotive force $\times$ (magnetomotive force $\times$ permeance). As shown in (E) of the same drawing, in the third case of (magnetomotive force $\times$ permeance) $g_T F_T \cdot \partial F_T / \partial \theta_2$, the decrease in the magnetomotive force $(F_T)_{3/2}$ is compensated for by the increase in the permeance $g_T$ due to the long circumferential length of the magnetic pole piece 50. However, the three are still the smallest. That is, it is understood that the torque is reduced when the circumferential length (L2) of the magnetic pole piece 50 is 1.5 times or more the circumferential length (N) of the second magnet 29.

Comparing the three cases, the second case in which a continuously large torque is obtained is the best. As can be seen from the comparison result, it is an ideal state that the circumferential length L2 of the magnetic pole piece 50 is equal to N. However, when the values of L2 and N are close to each other, the ideal state is approximately achieved. According to the knowledge of the inventors, when the difference between them is within a range not exceeding about 10%, it can be regarded as an approximate ideal state (naturally, the difference between them is preferably as small as possible, for example, when the difference between them is within 5%, the approximate ideal state is more preferably achieved, and when the error can be regarded as 0%, the ideal state is still more preferably achieved). Further, the circumferential length L2 of the magnetic pole piece 50 is a numerical value of the second opposing surface 32 of the magnetic pole piece 50 facing the second magnet 29 (that is, a numerical value of a local portion of the magnetic pole piece 50). The circumferential length L2 of the second opposing surface 32A can be extended as in the magnetic pole piece 512 (see Fig. 3A) given as an example of the magnetic pole piece 50, or the circumferential length L2 of the second opposing surface 32D can be shortened as in the magnetic pole piece 514 (see Fig. 3D) given as an example of the magnetic pole piece 50. That is, the relationship between only two parameters L2 and N does not necessarily represent the essence of the technique of the present disclosure (that is, the magnitude of the transmission torque is not necessarily determined by only these two parameters). Therefore, the inventor claims that when the magnetic pole piece 50 satisfying the relationship of $0.9 \times \min \{L2, L3\} \le N \le 1.1 \times \max \{L2, L3\}$ is adopted by supplementarily using L3 as the magnetoresistive average circumferential length of the magnetic pole piece 50 defined by the formula (A) as the representative value of the circumferential length of the magnetic pole piece 50, further improvement of the transmission torque is expected. 0.9 and 1.1 in the inequality correspond to the lower limit value and the upper limit value of the difference of 10% from the ideal state described above, respectively. This is common to the description of the present application. Further, as described above, in order to more preferably achieve the approximate ideal state, it is preferable to adopt the magnetic pole piece 50 satisfying the relationship of $0.95 \times \min \{L2, L3\} \le N \le 1.05 \times \max\{L2, L3\}$. In order to more preferably achieve the approximate ideal state, it is preferable to adopt the magnetic pole piece 50 satisfying the relationship of $1.0 \times \min \{L2, L3\} \le N \le 1.0 \times \max \{L2, L3\}$.

In the above description, the embodiment in which the magnetic pole piece 50 is a rotor has been described, but the same result can be obtained even in an embodiment in which the magnetic pole piece 50 is a stator. This is because the transmission torque is generated by a relative change in the circumferential positional relationship among the first yoke unit 10, the second yoke unit 20, and the magnetic pole piece unit 30.

<7. Relationship between Position of Tooth Portion, Position of Magnet, and Transmission Torque>

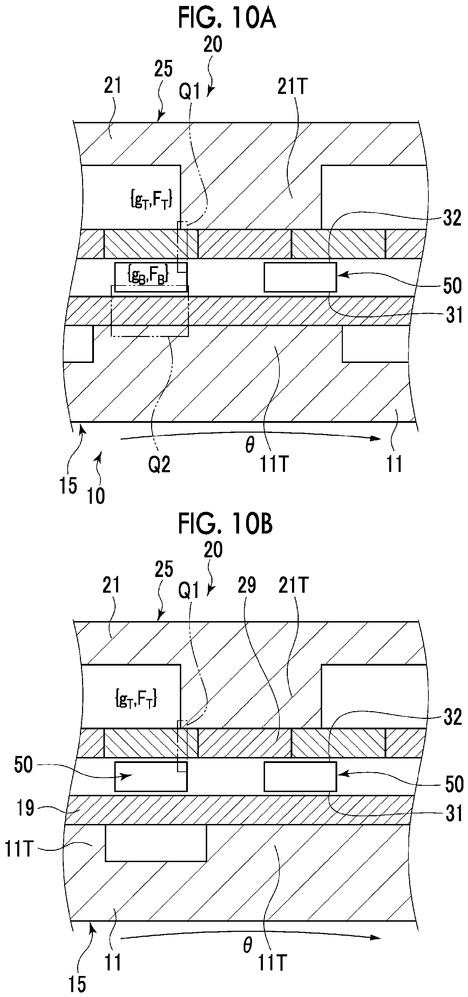

With reference to Figs. 10A and 10B, the reason why the transmission torque in the magnetic pole piece 50 at the circumferential position deviated from both of the plurality of first tooth portions 11T and the plurality of second tooth portions 21T is reduced will be described. Figs. 10A and 10B are schematic diagrams showing a third internal structure according to an embodiment.

The torque $T_1$ exerted on the first yoke 15 by one magnetic pole piece 50 and the torque $T_2$ exerted on the second yoke 25 by the magnetic pole piece 50 are represented by the equations (11) and (12) as described above. The second tooth portion 21T has a strong influence on the magnetic reluctance torque of the first term on the right side of Expression (11) and Expression (12). $g_{TB}$ is the permeance between the first yoke 15 and the second yoke 25, and is represented by Equation (9) as described above. $g_B$ is the permeance of the first yoke 15 and the magnetic pole piece 50.

Two cases are considered for the magnetic reluctance torque when at least a part of the magnetic pole piece 50 is arranged with the second tooth portion 21T in the radial direction. First, Fig. 10A shows a state in which the entire magnetic pole piece 50 is arranged with the first tooth portion 11T of the first yoke 15 in the radial direction. Fig. 10B shows a state in which the magnetic pole piece 50 is shifted in the circumferential direction with respect to the first tooth portion 11T.

The magnetic pole piece 50 and the second tooth portion 21T are arranged in the radial direction in a region indicated by a two-dot chain line Q1 in Fig. 10A, and the permeance of the magnetic pole piece 50 and the second tooth portion 21T in the region is denoted by $g_T$. The magnetic pole piece 50 is arranged with the first tooth portion 11T in the radial direction in a region indicated by a two-dot chain line Q2 in Fig. 10A, and the permeance of the magnetic pole piece 50 and the first tooth portion 11T in the region is denoted by $g_B$. Since $g_T \ll g_B$, the permeance $g_{TB}$ between the first yoke 15 and the second yoke 25 may be approximated as $g_T$ as in the following expression (14).

$$
\begin{aligned}
g_{TB} &= \frac{g_T g_B}{g_T + g_B} \\
&\approx \frac{g_T g_B}{g_B} \\
&= g_T
\end{aligned}
\qquad (14)
$$

Therefore, the gradient of the permeance is represented by the following equation (15). Expression (15) indicates that the magnetic reluctance torque is obtained in proportion to the area of the surface of the one end surface of the second magnet 29 facing the magnetic pole piece 50 (that is, the area can be approximated to the area of the surface of the second opposing surface 32 of the magnetic pole piece 50 facing the second magnet 29).

$$
\begin{aligned}
\frac{\partial g_{TB}}{\partial \theta_2} &= \frac{\partial g_T}{\partial \theta_2} \\
&= \mu L R_2 \frac{1}{t_3 + t_{23}}
\end{aligned}
\qquad (15)
$$

Therefore, in the case of Fig. 10A, both the magnetic reluctance torque of the first term of the right side of the equation (12) and the magnet torque of the second term act on the second yoke 25. This situation is preferable because the transmission torque is improved.

Next, when the magnetic pole piece 50 is not arranged with the first tooth portion 11T in the radial direction as shown in Fig. 10B, since $g_B \approx 0$, the permeance $g_{TB}$ between the first yoke 15 and the second yoke 25 is constant at 0 as shown in the following equation (16).

$$
\begin{aligned}
g_{TB} &= \frac{g_T g_B}{g_T + g_B} \\
&\approx \frac{g_T g_B}{g_T} \\
&\approx 0
\end{aligned}
\qquad (16)
$$

Therefore, the gradient of the permeance is also zero, and the magnetic reluctance torque is not generated as represented by the following equation (17).

$$
\begin{aligned}
\frac{\partial g_{TB}}{\partial \theta_2} &= \frac{\partial g_B}{\partial \theta_2} \\
&= 0
\end{aligned}
\qquad (17)
$$

Therefore, in the case of (B) in the lower diagram, neither the magnetic reluctance torque of the first term of the right side of Equation (12) nor the magnet torque of the second term acts on the first yoke unit 10. This situation is not preferable. In order to increase the transmission torque, it is effective to cause the situation (A) in the lower diagram to occur frequently and reduce the occurrence frequency of the situation (B) in the lower diagram. That is, it is understood that, when the magnetic pole piece 50 arranged with the second tooth portion 21T in the radial direction is located at a position shifted from the plurality of first tooth portions 11T in the circumferential direction during the operation of the magnetic gear 5, the transmission torque decreases.

<8. Magnetic Geared Electrical Machine 1 Incorporated with Magnetic Gear 5>

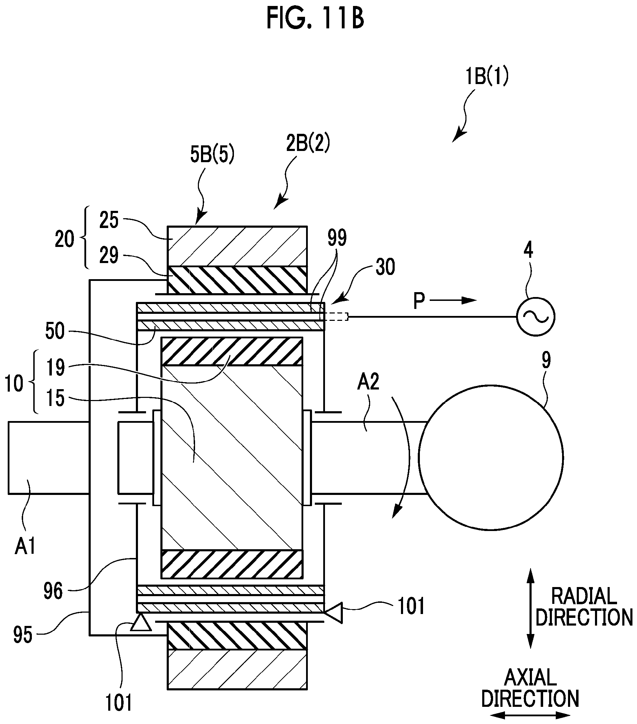

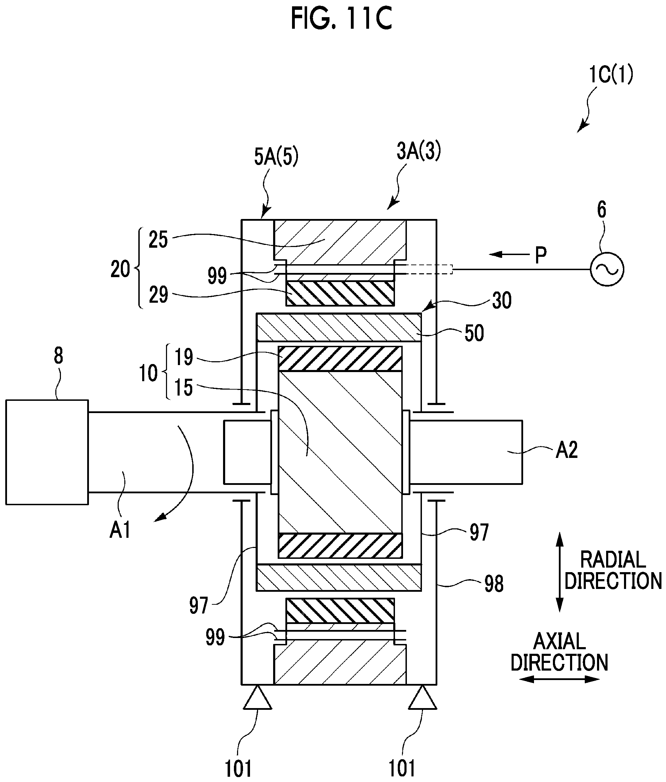

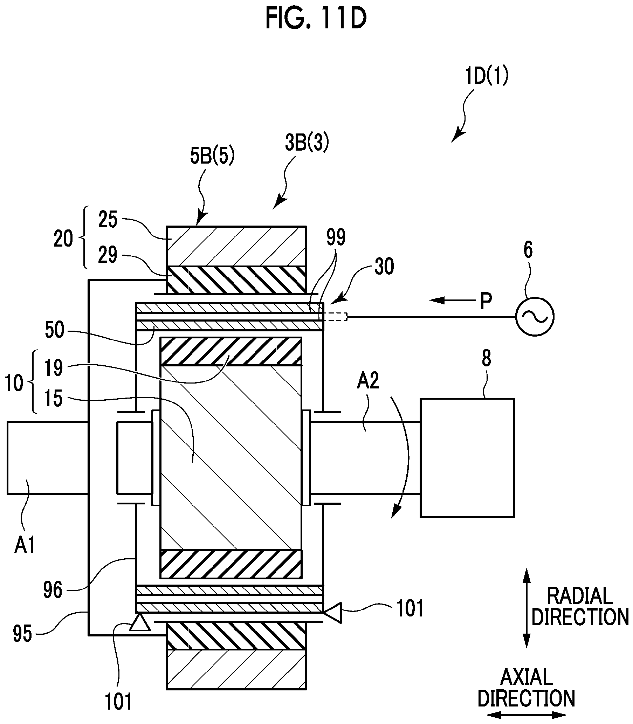

Referring to Figs. 11A to 11D, there is shown a magnetic geared electrical machine 1 in which a magnetic gear 5 is incorporated. The magnetic geared electrical machines 1A, 1B (1) shown in Figs. 11A, 11B are magnetic geared generators 2A, 2B (2) configured to be driven by input from a prime mover 9 to generate electricity. The magnetic geared generator 2 is configured to supply power P generated by power generation to a power supply destination 4 which may be, for example, a power grid. The magnetic geared electrical machines 1C, 1D (1) shown in Fig. 11C and Fig. 11D are magnetic geared motors 3A, 3B (3) configured to receive a supply of power P from a power supply source 6, which may be, for example, a power grid, to drive a rotary machine 8. The rotary machine 8 may be, for example, an electric vehicle that travels by driving of the magnetic geared motor 3. In this case, the magnetic geared motor 3 may be coupled to a drive shaft of the electric vehicle, which is a component of the rotary machine 8. The magnetic geared electrical machines 1A and 1C shown in Fig. 11A and Fig. 11C incorporate a magnetic gear 5A (see Fig. 1A), and the magnetic geared electrical machines 1B and 1D shown in Fig. 11B and Fig. 11D incorporate a magnetic gear 5B (see Fig. 1B).

<8-1. Magnetic Geared Generators 2A, 2B (2)>

The magnetic geared generator 2A, 2B (2) includes the magnetic gear 5 and the coil 99 wound around the second tooth portion 21T or the magnetic pole piece 50. The coil 99 is provided so as to be electrically conducted to the power supply destination 4. The coil 99 functioning as a stator winding (armature winding) is provided on the plurality of second tooth portions 21T in Fig. 11A, and is provided on the plurality of magnetic pole pieces 50 in Fig. 11B.

The magnetic geared generator 2A shown in Fig. 11A operates, for example, as follows. When the prime mover 9 coupled to the first rotation axis A1 functioning as an input shaft in the same drawing is driven, the first yoke unit 10 rotates according to the principle described above. As a result, a current is generated in the coil 99 by electromagnetic induction caused by the rotation of the magnetic pole piece unit 30 and the first yoke unit 10. Thus, the magnetic geared generator 2A can generate power. Note that the first yoke unit 10 is biased in the rotational direction by a rotating magnetic field generated as a result of generation of a current in the coil 99.

The operating principle of the magnetic geared generator 2B shown in Fig. 11B is similar to that of the magnetic geared generator 2A. When the prime mover 9 coupled to the second rotation axis A2 functioning as the input shaft in the same drawing is driven, the first yoke unit 10 rotates, and the second yoke unit 20 rotates according to the principle described above. As a result, a current is generated in the coil 99 by electromagnetic induction caused by the rotation of the first yoke unit 10 and the second yoke unit 20. Thus, the magnetic geared generator 2B can generate power. Note that the second yoke unit 20 is biased in the rotational direction by a rotating magnetic field that is generated as a result of generation of a current in the coil 99.

<8-2. Magnetic Geared Motors 3A, 3B (3)>

The magnetic geared motor 3A, 3B (3) includes the magnetic gear 5 and the coil 99 wound around the second tooth portion 21T or the magnetic pole piece 50. The coil 99 is provided so as to be electrically conducted to the power supply source 6. The coil 99 functioning as a stator winding (armature winding) is provided on the plurality of second tooth portions 21T in Fig. 11C, and is provided on the plurality of magnetic pole pieces 50 in Fig. 11D.

The magnetic geared motor 3A shown in Fig. 11C operates, for example, as follows. The first yoke unit 10 is biased by a rotating magnetic field generated by energization of the coil 99. When the first yoke unit 10 rotates together with the second rotation axis A2, the magnetic pole piece unit 30 rotates according to the principle described above. In the example of the same drawing, the first rotation axis A1 functioning as an output shaft drives the rotary machine 8.

The operating principle of the magnetic geared motor 3B shown in Fig. 11D is similar to that of the magnetic geared motor 3A. The second yoke unit 20 is biased by a rotating magnetic field generated by energization of the coil 99. When the second yoke unit 20 rotates together with the first rotation axis A1, the first yoke unit 10 rotates according to the principle described above. The second rotation axis A2, which functions as an output shaft in the example of the same drawing, drives the rotary machine 8.

According to the above configuration, since the torque caused by the magnetic field generated by energizing the coil (99) is obtained, the magnetic geared electrical machine (1) can improve the transmission torque. As described above, the magnetic geared generator 2 may not include the first rotation axis A1 or the second rotation axis A2 functioning as the output shaft, and the magnetic geared motor 3 may not include the first rotation axis A1 or the second rotation axis A2 functioning as the input shaft. Even in this case, the above-described advantages are obtained.

<9. Summary>

The contents described in the above embodiments are understood as follows, for example.

    1) A magnetic gear (5) according to at least one embodiment of the present disclosure includes

        a first yoke unit (10) including a plurality of first magnets (19) arranged in a circumferential direction and a first yoke

(15) supporting the plurality of first magnets (19),

a second yoke unit (20) disposed on an outer circumferential side or an inner circumferential side of the first yoke unit (10) and including a plurality of second magnets (29) arranged in the circumferential direction and a second yoke (25) supporting the plurality of second magnets (29), and

a magnetic pole piece unit (30) including a plurality of magnetic pole pieces (50) arranged in the circumferential direction between the first yoke unit (10) and the second yoke unit (20) so as to face each of the plurality of first magnets (19) and the plurality of second magnets (29) with a gap therebetween,

in which the first yoke (15) includes a first main body portion (11) having an inner circumferential surface (11A) or an outer circumferential surface (11B) supporting the plurality of first magnets (19),

the second yoke (25) includes a second main body portion (21) having an outer circumferential surface (21B) or an inner circumferential surface (21A) facing the plurality of second magnets (29), and at least one second tooth portion (21T) protruding in a radial direction from the outer circumferential surface (21B) or the inner circumferential surface (21A) of the second main body portion (21) toward the magnetic pole piece (50) and supporting the second magnet (29),

each of the magnetic pole pieces (50) has

a first opposing surface (31) facing the first magnet (19), and
a second opposing surface (32) facing the second magnet (29), and

in a case where a length of the first opposing surface (31) in the circumferential direction is denoted as L1 and a length of the second opposing surface (32) in the circumferential direction is denoted as L2,
at least one of the plurality of magnetic pole pieces (50) satisfies a relationship of L1 > L2.

According to the knowledge of the inventor, when the magnetic pole piece (50) satisfying the relationship of L1 > L2 is adopted, the transmission torque is improved. Therefore, according to the above configuration 1), it is possible to realize the magnetic gear (5) having the tooth portion that protrudes toward the magnetic pole piece (50) and supports the magnet, and having improved transmission torque.

2) In some embodiments, there is provided the magnetic gear (5) according to the above 1),

in which the first opposing surface (31) includes

a first end (311) which is an end on one side in the circumferential direction, and
a second end (312) which is an end on the other side in the circumferential direction, and

the at least one of the plurality of magnetic pole pieces (50) includes

a main body portion (60),
a first flange portion (61) that protrudes from the main body portion (60) toward the one side in the circumferential direction and that has the first end (311) of the first opposing surface (31), and
a second flange portion (62) that protrudes from the main body portion (60) toward the other side in the circumferential direction and that has the second end (312) of the first opposing surface (31).

With the above configuration 2), since the magnetic pole piece (50) includes the first flange portion (61) and the second flange portion (62), the length of the first opposing surface (31) in the circumferential direction increases. This reduces the magnetic resistance between the magnetic pole piece (50) and the first yoke unit (10), and further increases the magnetic flux flowing between the first yoke unit (10) and the second yoke unit (20) through the magnetic pole piece (50). Therefore, the transmission torque is further improved.

3) In some embodiments, there is provided the magnetic gear (5) according to the above 2),

in which the first flange portion (61) is configured such that a length in the radial direction decreases toward the one side, and
the second flange portion (62) is configured such that a length in the radial direction decreases toward the other side.

With the above configuration 3), the first flange portion (61) and the second flange portion (62) are close to the adjacent magnetic pole piece (50) only at the tips. That is, the first flange portion (61) and the second flange portion (62) are partially separated from the adjacent magnetic pole piece (50). As a result, it is possible to prevent the flow of magnetic flux between the two adjacent magnetic pole pieces (50). That is, the leakage magnetic flux is suppressed. Therefore, a decrease in transmission torque due to leakage of magnetic flux can be suppressed.

4) In some embodiments, there is provided the magnetic gear (5) according to the above 3),

in which the plurality of magnetic pole pieces (50) include a first specified magnetic pole piece (2511) and a second specified magnetic pole piece (2522) adjacent to each other in the circumferential direction,
each of the first specified magnetic pole piece (2511) and the second specified magnetic pole piece (2512) has the main body portion (60), the first flange portion (61), and the second flange portion (62), and
the first flange portion (61) of the first specified magnetic pole piece (2511) and the second flange portion (62) of the second specified magnetic pole piece (2512) are in contact with each other.

With the above configuration 4), the reinforcing effect of the plurality of magnetic pole pieces (50) can be improved.

5) In some embodiments, there is provided the magnetic gear (5) according to any one of the above 2) to 4),

in which the second opposing surface (32) includes

a third end (323) that is an end on one side in the circumferential direction, and
a fourth end (324) that is an end on the other side in the circumferential direction, and

the at least one of the plurality of magnetic pole pieces (50) includes

a first connection surface (71) that extends along the radial direction and that connects an end (611) of the first flange portion (61) on a second opposing surface (32) side in the radial direction and the third end (323) of the second opposing surface (32), and
a second connection surface (72) that extends along the radial direction and that connects an end (612) of the second flange portion (62) on a second opposing surface (32) side in the radial direction and the fourth end (324) of the second opposing surface (32).

With the above configuration 5), since both the first connection surface (71) and the second connection surface (72) extend along the radial direction, the shape of the magnetic pole piece (50) is simplified, and the magnetic pole piece (50) can be easily manufactured.

6) In some embodiments, there is provided the magnetic gear (5) according to any one of the above 3) to 5),

in which the first flange portion (61) includes

a first edge portion (81) that is a portion of the magnetic pole piece (50) located closest to the one side in the circumferential direction and that extends in an axial direction of the magnetic gear, and
a first recessed portion (91) that is recessed from the first edge portion (81) toward the other side in the circumferential direction and opened in the radial direction, and

the second flange portion (62) includes

a second edge portion (82) that is a portion of the magnetic pole piece (50) located closest to the other side in the circumferential direction and that extends in the axial direction, and
a second recessed portion (92) that is recessed from the second edge portion (82) toward the one side in the circumferential direction and opened in the radial direction.

When the magnetic flux of the magnetic pole piece (50) does not leak to the adjacent magnetic pole piece (50) and is a magnetic flux that flows in the radial direction between the first yoke unit (10) and the second yoke unit (20), the transmission torque increases. However, when the distance between two adjacent magnetic pole pieces (50) is too short, the magnetic flux flows between the two magnetic pole pieces (50), and the transmission torque decreases. In this regard, with the above configuration 6), since the first recessed portion (91) and the second recessed portion (92) are provided, the first flange portion (61) and the second flange portion (62) are partially separated from the adjacent magnetic pole piece (50) in the circumferential direction. Thus, the magnetic flux flowing between the two adjacent magnetic pole pieces (50) can be suppressed. That is, the leakage magnetic flux can be suppressed. Therefore, the transmission torque is further improved.

7) In some embodiments, there is provided the magnetic gear (5) according to the above 6),

in which the plurality of magnetic pole pieces (50) include a first adjacent magnetic pole piece (1511) and a second adjacent magnetic pole piece (1512) adjacent to each other in the circumferential direction, and
the first recessed portion (91) of the first adjacent magnetic pole piece (1511) is disposed so as to overlap at least a part of the second recessed portion (92) of the second adjacent magnetic pole piece (1512) in the axial direction.

With the above configuration 7), since the gap between the first recess (91) of the first adjacent magnetic pole piece (1511) and the second recess (92) of the second adjacent magnetic pole piece (1512) can be increased, it is possible to more effectively prevent the flow of magnetic flux between the first adjacent magnetic pole piece (1511) and the second adjacent magnetic pole piece (1512).

8) In some embodiments, there is provided the magnetic gear (5) of according to the above 7),

in which the at least one of the plurality of magnetic pole pieces (50) includes a plurality of electromagnetic steel plates (150) stacked in the axial direction of the magnetic gear (5), and
the plurality of electromagnetic steel plates (150) include

at least one first electromagnetic steel plate (151) forming the first edge portion (81) and the second edge portion (82), and
at least one second electromagnetic steel plate (152) having a length shorter than a length of the first electromagnetic steel plate (151) in the circumferential direction, and forming a bottom surface of each of the first recessed portion (91) and the second recessed portion (92).

With the above configuration 8), since the bottom surface of each of the first recess (91) and the second recess (92) is formed by the second electromagnetic steel plate (152) included in the plurality of electromagnetic steel plates, it is possible to simplify the configuration of the first recess (91) and the second recess (92).

9) In some embodiments, there is provided the magnetic gear (5) according to any one of the above 1) to 8),

in which at least one second tooth portion (21T) includes a plurality of second tooth portions (21T) arranged in the circumferential direction, and
in a case where an average length of the magnetic pole piece (50) in the circumferential direction is denoted as L3, and an adjacent distance between two second tooth portions (21T) included in the plurality of second tooth portions (21T) adjacent in the circumferential direction is denoted as M,
at least one of the plurality of magnetic pole pieces (50) satisfies a relationship of $0.9 \times \min \{L2, L3\} \leq M \leq 1.1 \times \max \{L2, L3\}$.

When the magnetic flux passing through a specific magnetic pole piece (50) flows in the radial direction between the first yoke unit (10) and the second yoke unit (20) without leaking to the adjacent magnetic pole piece (50), the transmission torque increases. However, when the adjacent distance between two adjacent second tooth portions (21T) is too short, the magnetic flux flows from one second tooth portion (21T) to another second tooth portion (21T) via the magnetic pole piece (50), and the magnetic flux flowing in the radial direction decreases. In this regard, with the above configuration 8), it is possible to prevent the adjacent distance between the two second tooth portions (21T) from becoming too short, and thus it is possible to prevent the magnetic flux from flowing from one second tooth portion (21T) to another second tooth portion (21T) via the magnetic pole piece (50). Therefore, the transmission torque can be improved.

10) A magnetic gear (5) according to at least one embodiment of the present disclosure includes,

a first yoke unit (10) including a plurality of first magnets (19) arranged in a circumferential direction and a first yoke (15) supporting the plurality of first magnets (19),
a second yoke unit (20) disposed on an outer circumferential side or an inner circumferential side of the first yoke unit (10) and including a plurality of second magnets (29) arranged in the circumferential direction and having a length shorter than a length of the first magnet (19) in the circumferential direction, and a second yoke (25) supporting the plurality of second magnets (29), and
a magnetic pole piece unit (30) including a plurality of magnetic pole pieces (50) arranged in the circumferential direction between the first yoke unit (10) and the second yoke unit (20) so as to face each of the plurality of first magnets (19) and the plurality of second magnets (29) with a gap therebetween,
in which the second yoke (25) includes a second main body portion (21) having an outer circumferential surface (21B) or an inner circumferential surface (21A) facing the plurality of second magnets (29), and at least one second tooth portion (21T) protruding in a radial direction from the outer circumferential surface (21B) or the inner circumferential surface (21A) of the second main body portion (21) toward the magnetic pole piece (50) and supporting the second magnet (29),
each of the magnetic pole pieces (50) has a second opposing surface (32) facing the second magnet (29),

the second opposing surface (32) includes

a third end (323) that is an end on one side in the circumferential direction, and
a fourth end (324) that is an end on the other side in the circumferential direction,

the at least one of the plurality of magnetic pole pieces (50) includes

a main body portion (60),
a third flange portion (63) that protrudes from the main body portion (60) to the one side in the circumferential direction and that has the third end (323) of the second opposing surface (32), and
a fourth flange portion (64) that protrudes from the main body portion (60) to the other side in the circumferential direction and that has the fourth end (324) of the second opposing surface (32), and

in a case where a length of the second opposing surface (32) in the circumferential direction is denoted as L2, an average length of the magnetic pole pieces in the circumferential direction is denoted as L3, and a length of the second magnet (29) in the circumferential direction is denoted as N,
at least one of the plurality of magnetic pole pieces (50) satisfies a relationship of $0.9 \times \min\{L2, L3\} \leq N \leq 1.1 \times \max\{L2, L3\}$.

According to the findings of the inventor, the magnetic pole piece (50) satisfying the relationship of $0.9 \times \min\{L2, L3\} \leq N \leq 1.1 \times \max\{L2, L3\}$ can obtain a continuous magnetic reluctance torque in the process in which the positional relationship between the magnetic pole piece (50) and the second yoke (25) relatively changes in the circumferential direction as the magnetic gear (5) operates. Thus, with the above configuration 10), it is possible to realize the magnetic gear (5) that includes the tooth portion that protrudes toward the magnetic pole piece (50) and supports the magnet, and has improved transmission torque. According to the knowledge of the inventor, when the magnetic pole piece (50) relatively moves across the boundary between two adjacent second magnets (29), the magnetomotive force is switched between positive and negative. In this regard, with the above configuration 10), since the magnetic pole piece (50) includes the third flange portion (63) and the fourth flange portion (64), it is possible to partially short-circuit the magnetomotive force that switches between positive and negative, and it is possible to moderate the switching between positive and negative of the magnetomotive force. This allows the magnetic gear (5) to continue rotating smoothly.
11) In some embodiments, there is provided the magnetic gear (5) according to the above 10),

in which the third flange portion (63) is configured such that a length in the radial direction decreases to the one side, and
the fourth flange portion (64) is configured such that a length in the radial direction decreases to the other side.

With the above configuration 11), the second opposing surface (32) of the magnetic pole piece (50) can cover the second magnet (29) in the circumferential direction without excess or deficiency, and the magnetic flux that flows between the first yoke unit (10) and the second yoke unit (20) in the radial direction due to the magnetomotive force of the second magnet (29) is maximized, thereby further improving the transmission torque.
12) In some embodiments, there is provided the magnetic gear (5) according to the above 10) or 11),

in which the plurality of magnetic pole pieces (50) include a first specified magnetic pole piece (3511) and a second specified magnetic pole piece (3522) adjacent to each other in the circumferential direction,
each of the first specified magnetic pole piece (3511) and the second specified magnetic pole piece (3512) has the main body portion (60), the third flange portion (63), and the fourth flange portion (64), and
the third flange portion (63) of the first specified magnetic pole piece (3511) and the fourth flange portion (64) of the second specified magnetic pole piece (3512) are in contact with each other.

With the above configuration 12), it is possible to improve the reinforcing effect of the plurality of magnetic pole pieces (50).
13) In some embodiments, there is provided the magnetic gear (5) according to any one of the above 10) to 12),

in which each of the magnetic pole pieces (50) has a first opposing surface (31) facing the first magnet (19),
the first opposing surface (31) includes

a first end (311) that is an end on one side in the circumferential direction, and
a second end (312) that is an end on the other side in the circumferential direction, and

the at least one of the plurality of magnetic pole pieces (50) includes

a third connection surface (73) extending along the radial direction and connecting an end (311) of the third flange portion (63) on a first opposing surface (31) side in the radial direction and the first end (1611) of the first opposing surface (31), and

a fourth connection surface (74) extending along the radial direction and connecting an end (1621) of the fourth flange portion (64) on the first opposing surface (31) side in the radial direction and the second end (312) of the first opposing surface (31).

With the above configuration 13), since both the third connection surface (73) and the fourth connection surface (74) extend along the radial direction, the shape of the magnetic pole piece (50) is simplified, and manufacturing can be facilitated.

14) In some embodiments, there is provided the magnetic gear (5) according to any one of the above 10) to 13),

in which the at least one second tooth portion (21T) includes a plurality of second tooth portions (21T) arranged in the circumferential direction, and

in a case where an adjacent distance between two second tooth portions (21T) adjacent to each other in the circumferential direction included in the plurality of second tooth portions (21T) is denoted as M,

at least one of the plurality of magnetic pole pieces (50) satisfies a relationship of $0.9 \times \min\{L2, L3\} \le M \le 1.1 \times \max\{L2, L3\}$.

With the above configuration of 14) above, the same advantages as those of 9) above can be obtained.

15) In some embodiments, there is provided the magnetic gear (5) according to any one of the above 10) to 14),

in which the first yoke (15) includes a first main body portion (11) having an inner circumferential surface (11A) or an outer circumferential surface (11B) facing the plurality of first magnets (19), and a plurality of first tooth portions (11T) protruding in the radial direction from the inner circumferential surface (11A) or the outer circumferential surface (11B) of the first main body portion (11) toward the magnetic pole piece (50) and supporting the plurality of first magnets (19),

the at least one second tooth portion (21T) includes a plurality of the second tooth portions (21T), and

a ratio of the number of the plurality of first magnets (19) to the number of the plurality of first tooth portions (11T) is equal to a ratio of the number of the plurality of second magnets (29) to the number of the plurality of second tooth portions (21T).

With the above configuration 15), when the magnetic gear (5) operates, the cycle in which the first magnet (19) facing the magnetic pole piece (50) is switched from the N-pole magnet to the S-pole magnet and the cycle in which the second magnet (29) facing the magnetic pole piece (50) is switched from the N-pole magnet to the S-pole magnet can coincide with each other.

16) In some embodiments, there is provided the magnetic gear (5) according to the above 15),

in which the plurality of first magnets (19) include a first specified magnet (191),

a center of the first specified magnet (191) coincides with a center of the first tooth portion (11T) supporting the first specified magnet (191) in the circumferential direction,

the plurality of second magnets (29) include two second adjacent magnets (295) adjacent to each other, and

an intermediate point between the two second adjacent magnets (295) in the circumferential direction coincides with a center of the single second tooth portion (21T) supporting the two second adjacent magnets (295).

In this regard, according to the configuration of 16), the timing at which the first magnet (19) facing the magnetic pole piece (50) is switched from one of the N-pole magnet and the S-pole magnet to the other and the timing at which the second magnet (29) facing the magnetic pole piece (50) is switched from one of the N-pole magnet and the S-pole magnet to the other are shifted from each other by half the cycle of configuration of 15), that is, 180 degrees in the period. Thus, the timing at which the second magnet (29) is switched from one of the N-pole magnet and the S-pole magnet to the other in the second tooth portion (21T) and the timing at which the first magnet (19) is switched from one of the N-pole magnet and the S-pole magnet to the other in the first tooth portion (11T) are generated at equal intervals shifted by 180 degrees in the cycle, and the generated torque is temporally uniformized. Accordingly, it is possible to prevent the transmission torque of the magnetic gear 5 from decreasing due to the magnetic flux saturation.

17) In some embodiments, there is provided the magnetic gear (5) according to the above 15),

in which the plurality of first magnets (19) include two first adjacent magnets (195) adjacent to each other,

an intermediate point between the two first adjacent magnets (195) in the circumferential direction coincides with a center of the single first tooth portion (11T) supporting the two first adjacent magnets (195), the plurality of second magnets (29) include a second specified magnet (291), and in the circumferential direction, a center of the second specified magnet (291) coincides with a center of the single second tooth portion (21T) supporting the second specified magnet (291).

With the above configuration of 17), the timing at which the first magnet (19) facing the magnetic pole piece (50) is switched from one of the N-pole magnet and the S-pole magnet to the other and the timing at which the second magnet (29) facing the magnetic pole piece (50) is switched from one of the N-pole magnet and the S-pole magnet to the other are shifted from each other by half the period the configuration of 20). Accordingly, it is possible to reduce a time period in which the magnetic pole piece (50) arranged with the second tooth portion (21T) in the radial direction is shifted in the circumferential direction with respect to the plurality of first tooth portions (11T), and thus the magnetic gear (5) can improve the transmission torque.

18) A magnetic gear (5) according to at least one embodiment of the present disclosure includes

a first yoke unit (10) including a plurality of first magnets (19) arranged in a circumferential direction and a first yoke (15) supporting the plurality of first magnets (19),
a second yoke unit (20) disposed on an outer circumferential side or an inner circumferential side of the first yoke unit (10) and including a plurality of second magnets (29) arranged in the circumferential direction and a second yoke (25) supporting the plurality of second magnets (29), and
a magnetic pole piece unit (30) including a plurality of magnetic pole pieces (50) arranged in the circumferential direction between the first yoke unit (10) and the second yoke unit (20) so as to face each of the plurality of first magnets (19) and the plurality of second magnets (29) with a gap therebetween,
in which the second yoke (25) includes a second main body portion (21) having an outer circumferential surface or an inner circumferential surface facing the plurality of second magnets (29), and a plurality of second tooth portions (21T) arranged in the circumferential direction and protruding in a radial direction from the outer circumferential surface or the inner circumferential surface of the second main body portion (21) toward the magnetic pole piece (50) and supporting the second magnets (29),
each of the magnetic pole pieces (50) has a second opposing surface (32) facing the second magnet (29), and
in a case where a length of the second opposing surface (32) in the circumferential direction is denoted as L2, an average length of the magnetic pole pieces in the circumferential direction is denoted as L3, and an adjacent distance between two of the second tooth portions (21T) adjacent to each other in the circumferential direction included in the plurality of second tooth portions (21T) is denoted as M,
at least one of the plurality of magnetic pole pieces (50) satisfies a relationship of $0.9 \times \min\{L2, L3\} \leq M \leq 1.1 \times \max\{L2, L3\}$.

As the magnetic flux generated between the first yoke unit (10) and the second yoke unit (20) flows in the radial direction, the gradient of the magnetic flux with respect to the relative rotation of the magnetic pole piece (50) increases, and the transmission torque increases. However, when the adjacent distance between the two adjacent second tooth portions (21T) is too short, the magnetic flux flows from the second tooth portion (21T) T to the adjacent second tooth portion (21T) via the magnetic pole piece (50), and the magnetic flux flowing in the radial direction decreases. In this regard, with the above configuration 18), it is possible to prevent the adjacent distance between the two second tooth portions (21T) from becoming too short, and thus it is possible to prevent the magnetic flux from flowing from the second tooth portion (21T) to the adjacent second tooth portion (21T) via the magnetic pole piece (50). Thus, a magnetic gear (5) having tooth portion protruding toward the magnetic pole piece (50) and supporting the magnets and having improved transmission torque is realized.

19) In some embodiments, there is provided the magnetic gear (5) according to the above 18),

in which the first yoke (15) includes a first main body portion (11) having an inner circumferential surface or an outer circumferential surface facing the plurality of first magnets (19), and a plurality of first tooth portions (11T) protruding in the radial direction from the inner circumferential surface or the outer circumferential surface of the first main body portion (11) toward the magnetic pole piece (50) and supporting the plurality of first magnets (19), and
a ratio of the number of the first tooth portions (11T) to the number of the plurality of first magnets (19) is equal to a ratio of the number of the second tooth portions (21T) to the number of the plurality of second magnets (29).

With the above configuration of 19), the same advantages as those of the configuration of 15) can be obtained.

20) In some embodiments, there is provided the magnetic gear (5) according to the above 19),

in which the plurality of first magnets (19) include a first specified magnet (191), a center of the first specified magnet (191) coincides with a center of the first tooth portion (11T) supporting the first specified magnet (191) in the circumferential direction,

the plurality of second magnets (29) include two second adjacent magnets (295) adjacent to each other, and an intermediate point between the two second adjacent magnets (295) in the circumferential direction coincides with a center of the single second tooth portion (21T) supporting the two second adjacent magnets (295).

With the above configuration of 20), the same advantages as those of the configuration of 16) can be obtained.

21) In some embodiments, there is provided the magnetic gear (5) according to the above 19),

in which the plurality of first magnets (19) include two first adjacent magnets (195) adjacent to each other, an intermediate point between the two first adjacent magnets (195) in the circumferential direction coincides with a center of the single first tooth portion (11T) supporting the two first adjacent magnets (195), the plurality of second magnets (29) include a second specified magnet (291), and in the circumferential direction, a center of the second specified magnet (291) coincides with a center of the single second tooth portion (21T) supporting the second specified magnet (291).

With the above configuration of 21), the same advantages as those of the configuration of 17) can be obtained.

22) A magnetic geared electrical machine (1) according to at least one embodiment of the present disclosure includes

the magnetic gear (5) according to any one of 1) to 21), and a coil (99) wound around the second tooth portion (21T) or the magnetic pole piece (50).

With the above configuration (22), for the same reasons as those of the above configurations (1), (10), and (18), it is possible to realize the magnetic geared electrical machine (1) that includes the tooth portion that protrudes toward the magnetic pole piece and supports the magnet, and has improved transmission torque. Further, since the torque caused by the magnetic field generated by energizing the coil (99) is obtained, the magnetic geared electrical machine (1) can improve the transmission torque.

Although the embodiments of the present disclosure have been described above, the present disclosure is not limited to the embodiments described above, and includes forms obtained by modifying the embodiments described above and forms obtained by appropriately combining these forms.

In the present specification, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same", "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

Furthermore, an expression such as "comprise", "include" and "have" are not intended to be exclusive of other components.

Reference Signs List

1: magnetic geared electrical machine
5: magnetic gear
10: first yoke unit
11: first main body portion
11A: inner circumferential surface
11B: outer circumferential surface
11T: first tooth portion
15: first yoke
19: first magnet

20: second yoke unit
21: second main body portion
21A: inner circumferential surface
21B: outer circumferential surface
21T: second tooth portion
25: second yoke
29: second magnet
30: magnetic pole piece unit
31: first opposing surface
32: second opposing surface
50: magnetic pole piece
60: main body portion
61: first flange portion
62: second flange portion
63: third flange portion
64: fourth flange portion
71: first connection surface
72: second connection surface
73: third connection surface
74: fourth connection surface
81: first edge portion
82: second edge portion
91: first recessed portion
92: second recessed portion
99: coil
150: electromagnetic steel plate
151: first electromagnetic steel plate
151B: first corner portion
151C: second corner portion
152: second electromagnetic steel plate
160: main body portion
191: first specified magnet
195: first adjacent magnet
291: second specified magnet
295: second adjacent magnet
311, 1311: first end
312, 1312: second end
323, 1323: third end
324, 1324: fourth end
1511: first adjacent magnetic pole piece
1512: second adjacent magnetic pole piece
1611, 1621: end
G1, G2: gap

**Claims**

1.  A magnetic gear comprising:

    a first yoke unit including a plurality of first magnets arranged in a circumferential direction and a first yoke supporting the plurality of first magnets;
    a second yoke unit disposed on an outer circumferential side or an inner circumferential side of the first yoke unit and including a plurality of second magnets arranged in the circumferential direction and a second yoke supporting the plurality of second magnets; and
    a magnetic pole piece unit including a plurality of magnetic pole pieces arranged in the circumferential direction between the first yoke unit and the second yoke unit so as to face each of the plurality of first magnets and the plurality of second magnets with a gap therebetween,
    wherein the first yoke includes a first main body portion having an inner circumferential surface or an outer circumferential surface supporting the plurality of first magnets,
the second yoke includes a second main body portion having an outer circumferential surface or an inner circumferential surface facing the plurality of second magnets, and at least one second tooth portion protruding in a radial direction from the outer circumferential surface or the inner circumferential surface of the second main body portion toward the magnetic pole piece and supporting the second magnet,
each of the magnetic pole pieces has

a first opposing surface facing the first magnet, and
a second opposing surface facing the second magnet, and

in a case where a length of the first opposing surface in the circumferential direction is denoted as L1, and a length of the second opposing surface in the circumferential direction is denoted as L2,
at least one of the plurality of magnetic pole pieces satisfies a relationship of L1 > L2.

2. The magnetic gear according to Claim 1,

wherein the first opposing surface includes

a first end which is an end on one side in the circumferential direction, and
a second end which is an end on the other side in the circumferential direction, and

the at least one of the plurality of magnetic pole pieces includes

a main body portion,
a first flange portion that protrudes from the main body portion toward the one side in the circumferential direction and that has the first end of the first opposing surface, and
a second flange portion that protrudes from the main body portion toward the other side in the circumferential direction and that has the second end of the first opposing surface.

3. The magnetic gear according to Claim 2,

wherein the first flange portion is configured such that a length in the radial direction decreases toward the one side, and
the second flange portion is configured such that a length in the radial direction decreases toward the other side.

4. The magnetic gear according to Claim 3,

wherein the plurality of magnetic pole pieces include a first specified magnetic pole piece and a second specified magnetic pole piece adjacent to each other in the circumferential direction,
each of the first specified magnetic pole piece and the second specified magnetic pole piece has the main body portion, the first flange portion, and the second flange portion, and
the first flange portion of the first specified magnetic pole piece and the second flange portion of the second specified magnetic pole piece are in contact with each other.

5. The magnetic gear according to any one of Claims 2 to 4,

wherein the second opposing surface includes

a third end that is an end on one side in the circumferential direction, and
a fourth end that is an end on the other side in the circumferential direction, and

the at least one of the plurality of magnetic pole pieces includes

a first connection surface that extends along the radial direction and that connects an end of the first flange portion on a second opposing surface side in the radial direction and the third end of the second opposing surface, and
a second connection surface that extends along the radial direction and that connects an end of the second flange portion on a second opposing surface side in the radial direction and the fourth end of the second

31

opposing surface.

**6.** The magnetic gear according to Claim 3,

wherein the first flange portion includes

a first edge portion that is a portion of the magnetic pole piece located closest to the one side in the circumferential direction and that extends in an axial direction of the magnetic gear, and
a first recessed portion that is recessed from the first edge portion toward the other side in the circumferential direction and opened in the radial direction, and

the second flange portion includes

a second edge portion that is a portion of the magnetic pole piece located closest to the other side in the circumferential direction and that extends in the axial direction, and
a second recessed portion that is recessed from the second edge portion toward the one side in the circumferential direction and opened in the radial direction.

**7.** The magnetic gear according to Claim 6,

wherein the plurality of magnetic pole pieces include a first adjacent magnetic pole piece and a second adjacent magnetic pole piece adjacent to each other in the circumferential direction, and
the first recessed portion of the first adjacent magnetic pole piece is disposed so as to overlap at least a part of the second recessed portion of the second adjacent magnetic pole piece in the axial direction.

**8.** The magnetic gear according to Claim 7,

wherein the at least one of the plurality of magnetic pole pieces includes a plurality of electromagnetic steel plates stacked in the axial direction of the magnetic gear, and
the plurality of electromagnetic steel plates include

at least one first electromagnetic steel plate forming the first edge portion and the second edge portion, and
at least one second electromagnetic steel plate having a length shorter than a length of the first electromagnetic steel plate in the circumferential direction, and forming a bottom surface of each of the first recessed portion and the second recessed portion.

**9.** The magnetic gear according to Claim 7 or 8,

wherein at least one second tooth portion includes a plurality of second tooth portions arranged in the circumferential direction, and
in a case where an average length of the magnetic pole piece in the circumferential direction is denoted as L3, and an adjacent distance between two second tooth portions included in the plurality of second tooth portions adjacent in the circumferential direction is denoted as M,
at least one of the plurality of magnetic pole pieces satisfies a relationship of $0.9 \times \min\{L2, L3\} \le M \le 1.1 \times \max\{L2, L3\}$.

**10.** A magnetic gear comprising:

a first yoke unit including a plurality of first magnets arranged in a circumferential direction and a first yoke supporting the plurality of first magnets;
a second yoke unit disposed on an outer circumferential side or an inner circumferential side of the first yoke unit and including a plurality of second magnets arranged in the circumferential direction and having a length shorter than a length of the first magnet in the circumferential direction, and a second yoke supporting the plurality of second magnets; and
a magnetic pole piece unit including a plurality of magnetic pole pieces arranged in the circumferential direction between the first yoke unit and the second yoke unit so as to face each of the plurality of first magnets and the plurality of second magnets with a gap therebetween,
wherein the second yoke includes a second main body portion having an outer circumferential surface or an inner circumferential surface facing the plurality of second magnets, and at least one second tooth portion protruding in a radial direction from the outer circumferential surface or the inner circumferential surface of the second main body portion toward the magnetic pole piece and supporting the second magnet,

each of the magnetic pole pieces has a second opposing surface facing the second magnet, the second opposing surface includes

a third end that is an end on one side in the circumferential direction, and
a fourth end that is an end on the other side in the circumferential direction,

the at least one of the plurality of magnetic pole pieces includes

a main body portion,
a third flange portion that protrudes from the main body portion to the one side in the circumferential direction and that has the third end of the second opposing surface, and
a fourth flange portion that protrudes from the main body portion to the other side in the circumferential direction and that has the fourth end of the second opposing surface, and

in a case where a length of the second opposing surface in the circumferential direction is denoted as L2, an average length of the magnetic pole pieces in the circumferential direction is denoted as L3, and a length of the second magnet in the circumferential direction is denoted as N,
at least one of the plurality of magnetic pole pieces satisfies a relationship of $0.9 \times \min\{L2, L3\} \leq N \leq 1.1 \times \max\{L2, L3\}$.

11. The magnetic gear according to Claim 10,

wherein the third flange portion is configured such that a length in the radial direction decreases to the one side, and
the fourth flange portion is configured such that a length in the radial direction decreases to the other side.

12. The magnetic gear according to Claim 11,

wherein the plurality of magnetic pole pieces include a first specified magnetic pole piece and a second specified magnetic pole piece adjacent to each other in the circumferential direction,
each of the first specified magnetic pole piece and the second specified magnetic pole piece has the main body portion, the third flange portion, and the fourth flange portion, and
the third flange portion of the first specified magnetic pole piece and the fourth flange portion of the second specified magnetic pole piece are in contact with each other.

13. The magnetic gear according to any one of Claims 10 to 12,

wherein each of the magnetic pole pieces has a first opposing surface facing the first magnet,
the first opposing surface includes

a first end that is an end on one side in the circumferential direction, and
a second end that is an end on the other side in the circumferential direction, and

the at least one of the plurality of magnetic pole pieces includes

a third connection surface extending along the radial direction and connecting an end of the third flange portion on a first opposing surface side in the radial direction and the first end of the first opposing surface, and
a fourth connection surface extending along the radial direction and connecting an end of the fourth flange portion on the first opposing surface side in the radial direction and the second end of the first opposing surface.

14. The magnetic gear according to Claim 13,

wherein the at least one second tooth portion includes a plurality of second tooth portions arranged in the circumferential direction, and

in a case where an adjacent distance between two second tooth portions adjacent to each other in the circumferential direction included in the plurality of second tooth portions is denoted as M,

at least one of the plurality of magnetic pole pieces satisfies a relationship of $0.9 \times \min \{L2, L3\} \leq M \leq 1.1 \times \max \{L2, L3\}$.

15. The magnetic gear according to Claim 10 or 11,

wherein the first yoke includes a first main body portion having an inner circumferential surface or an outer circumferential surface facing the plurality of first magnets, and a plurality of first tooth portions protruding in the radial direction from the inner circumferential surface or the outer circumferential surface of the first main body portion toward the magnetic pole piece and supporting the plurality of first magnets,

the at least one second tooth portion includes a plurality of the second tooth portions, and

a ratio of the number of the plurality of first magnets to the number of the plurality of first tooth portions is equal to a ratio of the number of the plurality of second magnets to the number of the plurality of second tooth portions.

16. The magnetic gear according to Claim 15,

wherein the plurality of first magnets include a first specified magnet,

a center of the first specified magnet coincides with a center of the first tooth portion supporting the first specified magnet in the circumferential direction,

the plurality of second magnets include two second adjacent magnets adjacent to each other, and

an intermediate point between the two second adjacent magnets in the circumferential direction coincides with a center of the single second tooth portion supporting the two second adjacent magnets.

17. The magnetic gear according to Claim 15,

wherein the plurality of first magnets include two first adjacent magnets adjacent to each other,

an intermediate point between the two first adjacent magnets in the circumferential direction coincides with a center of the single first tooth portion supporting the two first adjacent magnets,

the plurality of second magnets include a second specified magnet, and

in the circumferential direction, a center of the second specified magnet coincides with a center of the single second tooth portion supporting the second specified magnet.

18. A magnetic gear comprising;

a first yoke unit including a plurality of first magnets arranged in a circumferential direction and a first yoke supporting the plurality of first magnets;

a second yoke unit disposed on an outer circumferential side or an inner circumferential side of the first yoke unit and including a plurality of second magnets arranged in the circumferential direction and a second yoke supporting the plurality of second magnets; and

a magnetic pole piece unit including a plurality of magnetic pole pieces arranged in the circumferential direction between the first yoke unit and the second yoke unit so as to face each of the plurality of first magnets and the plurality of second magnets with a gap therebetween,

wherein the second yoke includes a second main body portion having an outer circumferential surface or an inner circumferential surface facing the plurality of second magnets, and a plurality of second tooth portions arranged in the circumferential direction and protruding in a radial direction from the outer circumferential surface or the inner circumferential surface of the second main body portion toward the magnetic pole piece and supporting the second magnets,

each of the magnetic pole pieces has a second opposing surface facing the second magnet, and

in a case where a length of the second opposing surface in the circumferential direction is denoted as L2, an average length of the magnetic pole pieces in the circumferential direction is denoted as L3, and an adjacent distance between two of the second tooth portions adjacent to each other in the circumferential direction included in the plurality of second tooth portions is denoted as M,

at least one of the plurality of magnetic pole pieces satisfies a relationship of $0.9 \times \min \{L2, L3\} \leq M \leq 1.1 \times \max \{L2, L3\}$.

19. The magnetic gear according to Claim 18,

wherein the first yoke includes a first main body portion having an inner circumferential surface or an outer circumferential surface facing the plurality of first magnets, and a plurality of first tooth portions protruding in the radial direction from the inner circumferential surface or the outer circumferential surface of the first main body portion toward the magnetic pole piece and supporting the plurality of first magnets, and

a ratio of the number of the first tooth portions to the number of the plurality of first magnets is equal to a ratio of the number of the second tooth portions to the number of the plurality of second magnets.

20. The magnetic gear according to Claim 19,

wherein the plurality of first magnets include a first specified magnet,
a center of the first specified magnet coincides with a center of the first tooth portion supporting the first specified magnet in the circumferential direction,
the plurality of second magnets include two second adjacent magnets adjacent to each other, and
an intermediate point between the two second adjacent magnets in the circumferential direction coincides with a center of the single second tooth portion supporting the two second adjacent magnets.

21. The magnetic gear according to Claim 19,

wherein the plurality of first magnets include two first adjacent magnets adjacent to each other,
an intermediate point between the two first adjacent magnets in the circumferential direction coincides with a center of the single first tooth portion supporting the two first adjacent magnets,
the plurality of second magnets include a second specified magnet, and
in the circumferential direction, a center of the second specified magnet coincides with a center of the single second tooth portion supporting the second specified magnet.

22. A magnetic geared electrical machine comprising:

the magnetic gear according to Claim 1, 10 or 18; and
a coil wound around the second tooth portion or the magnetic pole piece.

# FIG. 1A

# FIG. 1B

5B(5)

20 { 25
29

30

50
10 { 19
15

A2

A1

96

95

101

101

RADIAL
DIRECTION

AXIAL
DIRECTION

# FIG. 2A

OUTER CIRCUMFERENTIAL SIDE

↑
RADIAL DIRECTION
↓

INNER CIRCUMFERENTIAL SIDE

CIRCUMFERENTIAL DIRECTION

← →

OTHER SIDE    ONE SIDE

EP 4 502 426 A1

# FIG. 2B

OUTER CIRCUMFERENTIAL SIDE

RADIAL DIRECTION

INNER CIRCUMFERENTIAL SIDE

CIRCUMFERENTIAL DIRECTION

OTHER SIDE    ONE SIDE

10

15

50  31  11A  11

19

G1

30

G2

29

32  21  20  21T  25  21B

EP 4 502 426 A1

# FIG. 2C

OUTER CIRCUMFERENTIAL SIDE

RADIAL DIRECTION

INNER CIRCUMFERENTIAL SIDE

CIRCUMFERENTIAL DIRECTION

OTHER SIDE    ONE SIDE

EP 4 502 426 A1

EP 4 502 426 A1

# FIG. 2D

OUTER
CIRCUMFERENTIAL
SIDE

RADIAL
DIRECTION

INNER
CIRCUMFERENTIAL
SIDE

CIRCUMFERENTIAL
DIRECTION

OTHER          ONE
SIDE           SIDE

EP 4 502 426 A1

# FIG. 3A

FIG. 3B

# FIG. 3C

OUTER CIRCUMFERENTIAL SIDE

RADIAL DIRECTION

INNER CIRCUMFERENTIAL SIDE

CIRCUMFERENTIAL DIRECTION

OTHER SIDE   ONE SIDE

EP 4 502 426 A1

44

FIG. 3D

# FIG. 4A

EP 4 502 426 A1

## FIG. 4B

151(150)

32

151A(60)

62A(62)

31

61A(61)

151C
(81)

151B(81)

P1

## FIG. 4C

152(150)

32

152A(60)

152C(62A)

152B(61A)

702

701

91

81

82

92

31

P2

# FIG. 4D

51(50)
60        2522
51(50)
60        2511
51(50)
60        2522

62        61        62        61        62        61

CIRCUMFERENTIAL
DIRECTION

OTHER          ONE
SIDE           SIDE

OUTER
CIRCUMFERENTIAL
SIDE

RADIAL
DIRECTION

INNER
CIRCUMFERENTIAL
SIDE

FIG. 5A

EP 4 502 426 A1

# FIG. 5B

OUTER CIRCUMFERENTIAL SIDE

RADIAL DIRECTION

INNER CIRCUMFERENTIAL SIDE

CIRCUMFERENTIAL DIRECTION

OTHER SIDE    ONE SIDE

25   21T   20   21

29    29    M    21T
21T

522(52)    1324B(324)    L2    N    522(52)
320B(32)    1323B(323)

64B(64)    L3    63B(63)
704B(704)    703B(703)
160B(60)    521(52)
310B(31)    50

L1

11  11B    15    19    11T

EP 4 502 426 A1

FIG. 5C

21T

21

20

25 21T

M

29

29

21T

523(52)

1323C(323)

63C (63)

523(52)

50

L2

320C(32)

L3

N

310C(31)

L1

64C (64)

160C (60)

1324C(324)

523(52)

29

11T

19

15

11 11B

OUTER CIRCUMFERENTIAL SIDE

RADIAL DIRECTION

INNER CIRCUMFERENTIAL SIDE

CIRCUMFERENTIAL DIRECTION

ONE SIDE

OTHER SIDE

EP 4 502 426 A1

# FIG. 5D

52(50)    52(50)    52(50)

64   3522   63    64   3511   63    64   3522   63

60    60    60

CIRCUMFERENTIAL
DIRECTION

OTHER   ONE
SIDE    SIDE

OUTER
CIRCUMFERENTIAL
SIDE

RADIAL
DIRECTION

INNER
CIRCUMFERENTIAL
SIDE

# FIG. 6

OUTER CIRCUMFERENTIAL SIDE

↕ RADIAL DIRECTION

INNER CIRCUMFERENTIAL SIDE

CIRCUMFERENTIAL DIRECTION

OTHER SIDE ↔ ONE SIDE

EP 4 502 426 A1

# FIG. 7A

EP 4 502 426 A1

FIG. 7B

EP 4 502 426 A1

# FIG. 8

# FIG. 9

## FIG. 10A

## FIG. 10B

# FIG. 11A

# FIG. 11B

# FIG. 11C

FIG. 11D

## INTERNATIONAL SEARCH REPORT

| International application No. |
| --- |
| **PCT/JP2023/006185** |

**A.   CLASSIFICATION OF SUBJECT MATTER**

*F16H 49/00*(2006.01)i; *H02K 49/10*(2006.01)i; *H02K 7/10*(2006.01)i
FI:    F16H49/00 A; H02K7/10 A; H02K49/10 A

According to International Patent Classification (IPC) or to both national classification and IPC

**B.   FIELDS SEARCHED**

Minimum documentation searched (classification system followed by classification symbols)

F16H49/00; H02K49/10; H02K7/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| A | JP 2012-235554 A (HIRATA, Katsuhiro) 29 November 2012 (2012-11-29) paragraphs [0019]-[0063], fig. 1-4 | 1-22 |
| A | Microfilm of the specification and drawings annexed to the request of Japanese Utility Model Application No. 178672/1979 (Laid-open No. 095620/1981) (SUGINO MACH. LTD.) 29 July 1981 (1981-07-29), specification, page 3, line 15 to page 6, line 13, fig. 1-4 | 1-22 |
| A | US 2013/0093275 A1 (AMOTECH CO., LTD.) 18 April 2013 (2013-04-18) paragraphs [0042]-[0102], fig. 2-8 | 1-22 |
| A | CN 105790543 A (BEIJING UNIVERSITY OF TECHNOLOGY) 20 July 2016 (2016-07-20) paragraphs [0033]-[0054], fig. 1-6 | 1-22 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 May 2023** | **16 May 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/006185**

| Patent document cited in search report | | | Publication date (day/month/year) | Patent family member(s) | Publication date (day/month/year) |
|---|---|---|---|---|---|
| JP | 2012-235554 | A | 29 November 2012 | (Family: none) | |
| JP | 56-095620 | U1 | 29 July 1981 | (Family: none) | |
| US | 2013/0093275 | A1 | 18 April 2013 | CN 102948049 A<br>paragraphs [0045]-[0104], fig. 2-8<br>KR 10-2011-0139433 A | |
| CN | 105790543 | A | 20 July 2016 | (Family: none) | |

Form PCT/ISA/210 (patent family annex) (January 2015)

**EP 4 502 426 A1**

**Patent documents cited in the description**

- JP 2022081212 A

- JP 6202354 B